# EUROPÄISCHE PATENTSCHRIFT

(11) **EP 4 073 868 B1**
(45) Veröffentlichungstag und Bekanntmachung des Hinweises auf die Patenterteilung: **17.07.2024**
(21) Anmeldenummer: 20824157.0
(22) Anmeldetag: 08.12.2020
(51) Int. Cl.: H01M 10/42, H01M 50/358

(54) **ELEKTROCHEMISCHE SPEICHEREINHEIT, ELEKTROCHEMISCHES SPEICHERSYSTEM UND VERFAHREN ZUR HERSTELLUNG EINER ELEKTROCHEMISCHEN SPEICHEREINHEIT**
ELECTROCHEMICAL STORAGE UNIT, ELECTROCHEMICAL STORAGE SYSTEM AND METHOD FOR PRODUCING AN ELECTROCHEMICAL STORAGE UNIT
UNITÉ DE STOCKAGE ÉLECTROCHIMIQUE, SYSTÈME DE STOCKAGE ÉLECTROCHIMIQUE ET PROCÉDÉ DE PRODUCTION D'UNE UNITÉ DE STOCKAGE ÉLECTROCHIMIQUE

(30) Priorität: 13.12.2019 DE 102019219593
(43) Veröffentlichungstag der Anmeldung: 19.10.2022
(73) Patentinhaber: ElringKlinger AG, 72581 Dettingen (DE)
(72) Erfinder: SCHWARZ, Florian, 72764 Reutlingen (DE); EILERS-RETHWISCH, Matthias, 72764 Reutlingen (DE)
(74) Vertreter: DTS Patent- und Rechtsanwälte Schnekenbühl und Partner mbB
(86) Internationale Anmeldenummer: PCT/EP2020/085070
(87) Internationale Veröffentlichungsnummer: WO 2021/116102

(56) Entgegenhaltungen:
- DE-A1- 102015 214 438
- DE-A1- 102017 202 981

## Beschreibung

Die vorliegende Erfindung betrifft eine elektrochemische Speichereinheit.

Ferner betrifft die vorliegende Erfindung ein elektrochemisches Speichersystem.

Die Erfindung betrifft weiter ein Verfahren zur Herstellung einer elektrochemischen Speichereinheit.

Elektrochemische Speichersysteme sind aus der US 2018/0287126 A1 bekannt. Die DE 10 2017 202 981 A1 beschreibt ein Energiespeichergerät. Die DE 10 2015 214 438 A1 beschreibt einen Stromquellenakku.

Der vorliegenden Erfindung liegt die Aufgabe zugrunde, eine elektrochemische Speichereinheit bereitzustellen, welche eine hohe Temperaturbeständigkeit aufweist und bei welcher eine Brandgefahr und/oder ein Feuerschlag minimiert ist.

Diese Aufgabe wird erfindungsgemäß durch eine elektrochemische Speichereinheit gemäß Anspruch 1 gelöst.

Die elektrochemische Speichereinheit umfasst eine oder mehrere elektrochemische Zellen, wobei jede elektrochemische Zelle ein erstes Anschlusselement und/oder ein zweites Anschlusselement umfasst.

An dem oder den ersten Anschlusselementen ist eine elektrische Spannung abgreifbar.

An dem oder den zweiten Anschlusselementen ist eine elektrische Spannung abgreifbar.

Die elektrochemische Speichereinheit umfasst ferner vorzugsweise ein Strömungsführungselement, welches mit zumindest einer der einen oder der mehreren elektrochemischen Zellen verbunden ist.

Insbesondere ist das Strömungsführungselement mit sämtlichen elektrochemischen Zellen, beispielsweise elektrisch und/oder mechanisch, verbunden.

Das Strömungsführungselement umfasst insbesondere ein Leiterplattenelement oder ist daraus gebildet. Das Leiterplattenelement umfasst beispielsweise ein Polymermaterial.

Vorzugsweise sind auf einer der einen oder der mehreren elektrochemischen Zellen zugewandten Seite des Leiterplattenelements ein oder mehrere Strömungskanäle und/oder ein oder mehrere Strömungsleitelemente zur Führung eines aus zumindest einer der einen oder der mehreren elektrochemischen Zellen austretenden Fluids ausgebildet und/oder angeordnet.

Durch den einen oder die mehreren Strömungskanäle und/oder das eine oder die mehreren Strömungsleitelemente weist eine Strömung der aus zumindest einer der einen oder der mehreren elektrochemischen Zellen austretenden Fluids insbesondere eine Vorzugsrichtung auf.

Die Strömungsrichtung ergibt sich abhängig davon, wo die eine elektrochemische Zelle oder die mehreren elektrochemischen Zellen, aus welcher oder welchen Fluid austritt, in der elektrochemischen Speichereinheit angeordnet sind.

Es tritt insbesondere dann ein Fluid aus einer elektrochemischen Zelle aus, wenn es aufgrund eines sich selbst verstärkenden Wärme produzierenden Prozesses innerhalb der entsprechenden elektrochemischen Zelle zu einer Überhitzung einer exothermen chemischen Reaktion kommt. Dies wird auch als "thermischer Event" oder "thermal runaway" bezeichnet.

Insbesondere um eine Explosion zu vermeiden, weisen die eine oder die mehreren elektrochemischen Zellen vorzugsweise mindestens eine Sollbruchstelle auf, welche im Falle eines Übersteigens einer kritischen Innenraumtemperatur und/oder eines kritischen Innenraumdrucks bricht und/oder birst. Dann kann Fluid aus der jeweiligen elektrochemischen Zelle austreten.

Mittels des Strömungsführungselements kann das austretende Fluid aus der elektrochemischen Speichereinheit ausgeleitet und/oder abgeleitet werden.

Günstig kann es sein, wenn das Strömungsführungselement eine Strömung des aus zumindest einer der einen oder der mehreren elektrochemischen Zellen austretenden Fluids führt und/oder wenn mittels des Strömungsführungselements eine Strömung des aus der einen oder den mehreren elektrochemischen Zellen austretenden Fluids ausgebildet ist und/oder wird.

Das Leiterplattenelement ist vorzugsweise zur gezielten Ablenkung und/oder Umlenkung der Strömung des Fluids ausgebildet.

Vorzugsweise bildet das Leiterplattenelement eine elektrische und/oder thermische und/oder mechanische Abschottung der einen oder der mehreren elektrochemischen Zellen gegenüber einer Umgebung der elektrochemischen Speichereinheit.

Das Leiterplattenelement umfasst vorzugsweise eine oder mehrere Leiterplatten oder ist daraus gebildet. Beispielsweise umfasst das Leiterplattenelement eine oder mehrere sogenannte "FR4-Leiterplatten" oder ist daraus gebildet.

Vorteilhaft kann es sein, wenn das Leiterplattenelement einen Träger und/oder einen Rahmen für die eine oder die mehreren elektrochemischen Zellen bildet. Das Leiterplattenelement umfasst vorzugsweise ein elektrisch isolierendes Material.

"Elektrisch isolierend" bedeutet vorzugsweise, dass das damit bezeichnete Element und/oder Material einen spezifischen elektrischen Widerstand von 10⁸ Ω x cm oder mehr, insbesondere von 10¹⁰ Ω x cm oder mehr, aufweist.

Durch die Verwendung des Leiterplattenelements weist das Strömungsführungselement vorzugsweise eine elektrische Durchschlagfestigkeit, insbesondere bei ca. 23 °C, von ca. 18 kV/mm oder mehr, insbesondere von ca. 20 kV/mm oder mehr, auf.

Vorzugsweise beträgt die elektrische Durchschlagfestigkeit des Strömungsführungselements, insbesondere bei ca. 23 °C, ca. 55 kV/mm oder weniger, insbesondere ca. 50 kV/mm oder weniger.

Die elektrische Durchschlagfestigkeit wird insbesondere gemäß einer der Normen der Normenreihe IEC 60243 bestimmt.

Vorzugsweise erfüllt das Strömungsführungselement die Spezifikationen gemäß IPC 4101 (C).

Beispielsweise weist das Strömungsführungselement, insbesondere bei einer Dicke von ca. 0,5 mm oder mehr, eine elektrische Durchschlagfestigkeit von ca. 30 kV/mm oder mehr auf.

Günstig kann es sein, wenn das Leiterplattenelement stoffschlüssig und/oder formschlüssig und/oder kraftschlüssig mit zumindest einer, insbesondere sämtlichen elektrochemischen Zellen, verbunden ist.

Es kann vorgesehen sein, dass das Strömungsführungselement zumindest mit dem ersten Anschlusselement einer elektrochemischen Zelle, insbesondere mit den ersten Anschlusselementen sämtlicher elektrochemischer Zellen der elektrochemischen Speichereinheit, verbunden ist.

Vorzugsweise ist das Strömungsführungselement zumindest mit dem zweiten Anschlusselement einer elektrochemischen Zelle, insbesondere mit den zweiten Anschlusselementen sämtlicher elektrochemischer Zellen der elektrochemischen Speichereinheit, verbunden.

Beispielsweise bildet das Strömungsführungselement ein Abdeckelement der elektrochemischen Speichereinheit oder einen Bestandteil davon.

Vorzugsweise ist das Leiterplattenelement zur mechanischen Befestigung und/oder elektrischen Kontaktierung des einen oder der mehreren ersten Anschlusselemente ausgebildet.

Insbesondere ist das Leiterplattenelement zur mechanischen Befestigung und/oder elektrischen Kontaktierung des einen oder der mehreren zweiten Anschlusselemente ausgebildet.

Die eine oder die mehreren elektrochemischen Zellen sind vorzugsweise Batterien und/oder Akkumulatoren, insbesondere Lithium-Ionen-Batterien und/oder Lithium-Ionen-Akkumulatoren.

Günstig kann es sein, wenn die eine oder die mehreren elektrochemischen Zellen prismatische Zellen sind und sowohl ein erstes Anschlusselement als auch ein zweites Anschlusselement umfassen, welche beispielsweise auf einer Nebenseite der jeweiligen elektrochemischen Zelle angeordnet sind.

Alternativ sind die eine oder die mehreren elektrochemischen Zellen Rundzellen und/oder Pouch-Zellen.

Die elektrochemische Speichereinheit wird vorzugsweise in Fahrzeugen verwendet.

Beispielsweise ist die elektrochemische Speichereinheit ein Batteriemodul und/oder ein Akkumulatormodul.

In Ausführungsformen, in welchen die elektrochemische Speichereinheit mehrere elektrochemische Zellen aufweist, sind die ersten Anschlusselemente der mehreren elektrochemischen Zellen vorzugsweise mittels des Leiterplattenelements elektrisch und/oder mechanisch mit dem Leiterplattenelement und/oder miteinander kontaktiert.

Günstig kann es sein, wenn in Ausführungsformen, in welchen die elektrochemische Speichereinheit mehrere elektrochemische Zellen aufweist, die zweiten Anschlusselemente der mehreren elektrochemischen Zellen mittels des Leiterplattenelements elektrisch und/oder mechanisch mit dem Leiterplattenelement und/oder miteinander kontaktiert.

Es kann vorgesehen sein, dass das Leiterplattenelement nicht eben und/oder nicht plan ausgebildet ist.

Vorzugsweise sind ein oder mehrere Strömungsleitelemente durch eine oder mehrere Wölbungen des Leiterplattenelements in Richtung der einen oder der mehreren elektrochemischen Zellen gebildet.

Ergänzend oder alternativ sind eine oder mehrere Strömungsleitelemente durch eine oder mehrere Wölbungen des Leiterplattenelements in einer von der einen oder den mehreren elektrochemischen Zellen wegweisenden Richtung gebildet.

Beispielsweise weist das Leiterplattenelement einen zumindest näherungsweise V-förmigen oder einen zumindest näherungsweise W-förmigen Querschnitt auf.

Spitzen der V-Form oder der W-Form weisen vorzugsweise in Richtung der einen oder der mehreren elektrochemischen Zellen und/oder davon weg.

Beispielsweise ist ein mechanischer Kontakt zwischen Spitzen der V-Form oder der W-Form des Leiterplattenelements und einem oder mehreren Deckelelementen der einen oder der mehreren elektrochemischen Zellen ausgebildet.

Durch die V-Form oder die W-Form sind Wege zur Ableitung des aus der einen oder den mehreren elektrochemischen Zellen austretenden Fluids vorzugsweise verkürzt.

Der Querschnitt ist vorzugsweise senkrecht zu einer Haupterstreckungsebene einer Hauptseite einer elektrochemischen Zelle der einen oder der mehreren elektrochemischen Zellen genommen.

Beispielsweise ist das Leiterplattenelement in Richtung der einen oder der mehreren elektrochemischen Zellen oder in einer von der einen oder den mehreren elektrochemischen Zellen wegweisenden Richtung gekrümmt.

Eine oder mehrere Krümmungen des Leiterplattenelements bilden dabei vorzugsweise ein oder mehrere Strömungsleitelemente.

Beispielsweise sind zwischen dem einen oder den mehreren Strömungsleitelementen ein oder mehrere Strömungskanäle gebildet.

Der eine oder die mehreren Strömungskanäle sind vorzugsweise von einer der einen oder den mehreren elektrochemischen Zellen zugewandten Unterseite des Leiterplattenelements und einem oder mehreren Deckelelementen der einen oder der mehreren elektrochemischen Zellen gebildet.

Eine Strömungsrichtung und/oder eine Vorzugsrichtung der Strömung des aus zumindest einer der einen oder der mehreren elektrochemischen Zellen austretenden Fluids ist vorzugsweise parallel zu einer Haupterstreckungsebene des einen oder der mehreren Deckelelemente der einen oder der mehreren elektrochemischen Zellen angeordnet.

Vorzugsweise ist das Leiterplattenelement durch ein Umformverfahren, beispielsweise durch Heißformen, gebogen.

Es kann vorgesehen sein, dass ein oder mehrere Strömungskanäle der einen oder der mehreren Strömungskanäle zwischen dem Leiterplattenelement und einem oder mehreren von dem Leiterplattenelement beabstandeten Deckelelementen der einen oder der mehreren elektrochemischen Zellen gebildet sind.

Insbesondere ist der Strömungskanal seitlich von dem einen oder den mehreren ersten Anschlusselementen der einen oder der mehreren elektrochemischen Zellen begrenzt.

Ergänzend oder alternativ ist der Strömungskanal seitlich von dem einen oder den mehreren zweiten Anschlusselementen der einen oder der mehreren elektrochemischen Zellen begrenzt.

Günstig kann es sein, wenn ein oder mehrere Strömungskanäle durch Erhebungen und/oder Vertiefungen in dem Leiterplattenelement auf einer der einen oder den mehreren elektrochemischen Zellen zugewandten Seite des Leiterplattenelements gebildet sind.

Vorteilhaft kann es sein, wenn ein oder mehrere Strömungsleitelemente durch Erhebungen und/oder Vertiefungen in dem Leiterplattenelement auf einer der einen oder den mehreren elektrochemischen Zellen zugewandten Seite des Leiterplattenelements gebildet sind.

Beispielsweise sind der eine oder die mehreren Strömungskanäle in das Leiterplattenelement eingeformt.

Ergänzend oder alternativ sind das eine oder die mehreren Strömungsleitelemente in das Leiterplattenelement eingeformt.

Vorteilhaft kann es sein, wenn das Leiterplattenelement mindestens eine Sollbruchstelle aufweist, an welcher das Leiterplattenelement bei einem Übersteigen eines kritischen Drucks und/oder einer kritischen Temperatur in einem oder mehreren zwischen dem Leiterplattenelement und der einen oder den mehreren elektrochemischen Zellen gebildeten Strömungskanälen bricht.

Vorzugsweise umfasst die elektrochemische Speichereinheit mehrere elektrochemische Zellen und das Leiterplattenelement weist mindestens eine Sollbruchstelle auf, an welcher das Leiterplattenelement bei einem Übersteigen eines kritischen Drucks und/oder einer kritischen Temperatur in einem oder mehreren zwischen dem Leiterplattenelement und den mehreren elektrochemischen Zellen gebildeten Strömungskanälen bricht.

Die mindestens eine Sollbruchstelle ist insbesondere zwischen ersten Anschlusselementen benachbarter elektrochemischer Zellen und/oder zwischen zweiten Anschlusselementen benachbarter elektrochemischer Zellen angeordnet.

Die mindestens eine Sollbruchstelle ist vorzugsweise mindestens eine Materialschwachstelle, beispielsweise mindestens ein Bereich, in welchem das Leiterplattenelement eine lokal verminderte Dicke aufweist.

In dem mindestens einen Bereich lokal verminderter Dicke weist das Leiterplattenelement vorzugsweise eine um ca. 5 % oder mehr, insbesondere um ca. 10 % oder mehr, insbesondere um ca. 20 % oder mehr, verminderte Dicke auf als eine durchschnittliche Dicke des Leiterplattenelements in benachbarten Bereichen.

In dem mindestens einen Bereich lokal verminderter Dicke weist das Leiterplattenelement vorzugsweise weniger, insbesondere um ca. 70 % oder weniger, verminderte Dicke auf als eine durchschnittliche Dicke des Leiterplattenelements in benachbarten Bereichen.

Bei einem Brechen des Leiterplattenelements an der mindestens einen Sollbruchstelle kommt es vorzugsweise zu einer elektrischen Trennung des einen oder der mehreren ersten Anschlusselemente und/oder des einen oder der mehreren zweiten Anschlusselemente.

Durch die elektrische Trennung kann eine kontrollierte Entgasung ausgebildet werden.

Vorzugsweise ist aufgrund des Brechens und/oder Reißens des Leiterplattenelements mindestens eine elektrochemische Zelle von den benachbarten elektrochemischen Zellen elektrisch entkoppelbar und/oder wird entkoppelt.

So können eine oder mehrere elektrochemische Zellen, in denen eine Innenraumtemperatur eine kritische Temperatur überstiegen hat und/oder in denen ein Innenraumdruck einen kritischen Druck überstiegen hat, von den verbleibenden elektrochemischen Zellen elektrisch getrennt werden.

Durch das Brechen und/oder Reißen des Leiterplattenelements wird und/oder ist insbesondere mindestens eine defekte elektrochemische Zelle von den verbleibenden elektrochemischen Zellen elektrisch entkoppelt.

Es kann vorgesehen sein, dass das eine oder die mehreren ersten Anschlusselemente der einen oder der mehreren elektrochemischen Zellen in das Leiterplattenelement integriert und/oder in ein Material des Leiterplattenelements eingebettet sind.

Günstig kann es sein, wenn das eine oder die mehreren zweiten Anschlusselemente der einen oder der mehreren elektrochemischen Zellen in das Leiterplattenelement integriert und/oder in ein Material des Leiterplattenelements eingebettet sind.

Vorzugsweise sind das eine oder die mehreren ersten Anschlusselemente zwischen zwei Lagen des Leiterplattenelements aufgenommen.

Insbesondere sind das eine oder die mehreren zweiten Anschlusselemente zwischen zwei Lagen des Leiterplattenelements aufgenommen.

Es kann vorgesehen sein, dass das Leiterplattenelement eine variierende Dicke entlang dessen Haupterstreckungsebene aufweist.

Die Dicke ist vorzugsweise senkrecht zu der Haupterstreckungsebene des Leiterplattenelements definiert.

Beispielsweise variiert die Dicke des Leiterplattenelements entlang dessen Haupterstreckungsebene um ca. 5 % oder mehr, insbesondere um ca. 10 % oder mehr, beispielsweise um ca. 15 % oder mehr, bezogen auf eine durchschnittliche Dicke des Leiterplattenelements.

Vorzugsweise variiert die Dicke des Leiterplattenelements entlang dessen Haupterstreckungsebene um ca. 90 % oder weniger, insbesondere um ca. 80 % oder weniger, beispielsweise um ca. 60 % oder weniger, bezogen auf eine durchschnittliche Dicke des Leiterplattenelements.

Es kann vorgesehen sein, dass auf einer der einen oder den mehreren elektrochemischen Zellen abgewandten Seite des Leiterplattenelements eine oder mehrere Leiterbahnen angeordnet sind.

Mittels der einen oder den mehreren Leiterbahnen sind insbesondere das eine oder die mehreren ersten Anschlusselemente elektrisch kontaktierbar.

Insbesondere sind mittels der einen oder den mehreren Leiterbahnen das eine oder die mehreren zweiten Anschlusselemente elektrisch kontaktierbar.

Vorzugsweise sind im Bereich des einen oder der mehreren ersten Anschlusselemente und/oder im Bereich des einen oder der mehreren zweiten Anschlusselemente eine oder mehrere Durchkontaktierungen ausgebildet.

Die eine oder die mehreren Durchkontaktierungen erstrecken sich vorzugsweise jeweils senkrecht zu einer Haupterstreckungsebene des Leiterplattenelements vollständig durch das Leiterplattenelement hindurch.

Beispielsweise sind die einen oder die mehreren Leiterbahnen auf eine Oberfläche des Leiterplattenelements aufgeklebt oder aufgedruckt.

Die eine oder die mehreren Leiterbahnen umfassen vorzugsweise ein metallisches Material oder sind daraus gebildet. Das metallische Material ist beispielsweise Kupfer.

Es kann vorgesehen sein, dass das Leiterplattenelement einen oder mehrere flexible Bereiche aufweist oder vollständig flexibel ausgebildet ist.

"Flexibel" bedeutet vorzugsweise, dass sich das Leiterplattenelement in den entsprechenden Bereichen bei einem Übersteigen eines kritischen Drucks und/oder einer kritischen Temperatur in dem einen oder den mehreren Strömungskanälen zwischen der einen oder den mehreren elektrochemischen Zellen und dem Leiterplattenelement um ca. 10 % oder mehr, insbesondere um ca. 20 % oder mehr, beispielsweise um ca. 30 % oder mehr, eines Abstands zwischen dem Deckelelement einer elektrochemischen Zelle und dem Leiterplattenelement von der elektrochemischen Zelle wegbewegt und/oder wegdrückbar ist.

"Flexibel" bedeutet vorzugsweise, dass sich das Leiterplattenelement in den entsprechenden Bereichen bei einem Übersteigen eines kritischen Drucks und/oder einer kritischen Temperatur in dem einen oder den mehreren Strömungskanälen zwischen der einen oder den mehreren elektrochemischen Zellen und dem Leiterplattenelement um ca. 80 % oder weniger, insbesondere um ca. 70 % oder weniger, beispielsweise um ca. 60 % oder weniger, eines Abstands zwischen dem Deckelelement einer elektrochemischen Zelle und dem Leiterplattenelement von der elektrochemischen Zelle wegbewegt und/oder wegdrückbar ist.

Vorzugsweise sind mehrere flexible Bereiche ausgebildet, welche eine Längsrichtung aufweisen, die zumindest näherungsweise senkrecht zu einer Haupterstreckungsebene einer Hauptseite einer elektrochemischen Zelle angeordnet ist.

Beispielsweise sind zwei flexible Bereiche parallel zueinander angeordnet, so dass insbesondere ein Mittelbereich zwischen den zwei flexiblen Bereichen gebildet ist.

Der Mittelbereich ist beispielsweise mittig zwischen einem ersten Anschlusselement und einem zweiten Anschlusselement einer elektrochemischen Zelle angeordnet und/oder ist vorzugsweise in einer Draufsicht zumindest näherungsweise rechteckig ausgebildet.

Durch den einen oder die mehreren flexiblen Bereiche kann, insbesondere im Bereich des Mittelbereichs, ein Strömungskanal mit einem vergrößerten Querschnitt bereitgestellt werden. Der Querschnitt ist vorzugsweise parallel zu einer Haupterstreckungsebene einer Hauptseite einer elektrochemischen Zelle genommen.

Vorteilhaft kann es sein, wenn das Polymermaterial ein Polymermatrixmaterial ist, welches ein Fasermaterial umfasst.

Das Polymermaterial umfasst vorzugsweise ein thermoplastisches Polymermaterial und/oder ein duroplastisches Polymermaterial und/oder ein elastomeres Polymermaterial oder ist aus einem thermoplastischen Polymermaterial und/oder einem duroplastischen Polymermaterial und/oder einem elastomeren Polymermaterial gebildet.

Beispielsweise umfasst das Polymermaterial ein Epoxidharzmaterial oder ist daraus gebildet.

Die Verwendung von Fasermaterial bietet insbesondere den Vorteil, dass das Leiterplattenelement und/oder die elektrochemische Speichereinheit eine erhöhte Temperaturbeständigkeit, insbesondere von 200 °C oder mehr, beispielsweise 500 °C oder mehr, aufweist.

Ein Anteil des Fasermaterials beträgt vorzugsweise ca. 5 Gew.-% oder mehr, insbesondere ca. 10 Gew.-% oder mehr, bezogen auf eine Gesamtmasse aus dem Polymermatrixmaterial und dem Fasermaterial.

Vorzugsweise beträgt der Anteil des Fasermaterials ca. 90 Gew.-% oder weniger, insbesondere ca. 80 Gew.-% oder weniger, bezogen auf die Gesamtmasse aus dem Polymermatrixmaterial und dem Fasermaterial.

Beispielsweise sind Fasern des Fasermaterials in das Polymermatrixmaterial eingebettet und/oder homogen darin verteilt.

Das Fasermaterial umfasst vorzugsweise Glasfasern oder ist daraus gebildet.

Vorzugsweise umfasst das Fasermaterial Endlosfasern oder ist daraus gebildet. Endlosfasern sind vorzugsweise Fasern mit einer Faserlänge von ca. 50 mm oder mehr.

Vorteilhaft kann es sein, wenn Fasern des Fasermaterials, insbesondere 90 % der Fasern des Fasermaterials oder mehr, Haupterstreckungsrichtungen aufweisen, die zumindest näherungsweise parallel zueinander angeordnet sind.

"Zumindest näherungsweise" und/oder "im Wesentlichen" kennzeichnet vorzugsweise eine Abweichung von ± 10 %, insbesondere von ± 5 %, beispielsweise von ± 2 %.

Günstig kann es sein, wenn das Leiterplattenelement aus einem vorimprägnierten Fasermaterial hergestellt ist, wobei das Fasermaterial insbesondere mit einem Harzmaterial und/oder einer Mischung aus dem Harzmaterial und einem Härter imprägniert ist.

Beispielsweise ist das Leiterplattenelement aus sogenannten "Prepregs" hergestellt.

Beispielsweise ist das Fasermaterial mit einer Mischung aus dem Harzmaterial, dem Härter und einem Reaktionsbeschleuniger imprägniert.

Das Harzmaterial und/oder das Polymermatrixmaterial umfassen vorzugsweise ein thermoplastisches Polymermaterial und/oder ein duroplastisches Polymermaterial und/oder ein elastomeres Polymermaterial oder sind daraus gebildet.

Beispielsweise umfassen das Harzmaterial und/oder das Polymermatrixmaterial ein Epoxidharzmaterial oder sind daraus gebildet.

Es kann vorgesehen sein, dass das Harzmaterial und/oder das Polymermatrixmaterial ein Polyolefin, beispielsweise Polypropylen, umfassen oder daraus gebildet sind.

Beispielsweise weisen das Harzmaterial und/oder das Polymermatrixmaterial einen Schmelzflussindex von ca. 400 (cm³/10 min) oder mehr, insbesondere von ca. 700 (cm³/10 min) oder mehr, beispielsweise von ca. 1200 (cm³/10 min) oder mehr, auf.

Vorzugsweise weisen das Harzmaterial und/oder das Polymermatrixmaterial einen Schmelzflussindex von ca. 400 (g/10 min) oder mehr, insbesondere von ca. 700 (g/10 min) oder mehr, beispielsweise von ca. 1200 (g/10 min) oder mehr, auf.

Der Schmelzflussindex ist vorzugsweise gemäß der Norm ISO 1133 bestimmt.

Die angegebenen Werte für den Schmelzflussindex sind vorzugsweise auf eine Prüftemperatur von ca. 190 °C und eine Prüfmasse von ca. 5 kg bezogen.

Der Schmelzflussindex wird vorzugsweise mittels eines Kapillarrheometers bestimmt.

Durch die zuvor genannten Werte für den Schmelzflussindex weisen das Harzmaterial und/oder das Polymermatrixmaterial im geschmolzenen Zustand eine ausreichend hohe Viskosität auf, um das Fasermaterial zu benetzen und/oder zu imprägnieren.

Das Harzmaterial oder die Mischung aus dem Harzmaterial und dem Härter oder die Mischung aus dem Harzmaterial, dem Härter und dem Reaktionsbeschleuniger reagieren vorzugsweise bei der Herstellung des Leiterplattenelements zu dem Polymermatrixmaterial.

Günstig kann es sein, wenn das Harzmaterial oder die Mischung aus dem Harzmaterial und dem Härter oder die Mischung aus dem Harzmaterial, dem Härter und dem Reaktionsbeschleuniger bei einer Aushärtereaktion bei einer erhöhten Temperatur und/oder einem erhöhten Druck zu dem Polymermatrixmaterial reagieren.

Die sogenannten "Prepregs" können bei ca. 155 °C oder mehr verwendet werden.

Durch die Verwendung von Prepregs kann das resultierende Leiterplattenelement bei Temperaturen von ca. 155 °C oder mehr verwendet werden.

Eine Biegefestigkeit des resultierenden Leiterplattenelements beträgt vorzugsweise ca. 150 MPa oder mehr, insbesondere ca. 200 MPa oder mehr.

Die Biegefestigkeit ist vorzugsweise gemäß der Norm DIN EN ISO 14125:2011-05 bestimmt.

Günstig kann es sein, wenn das Leiterplattenelement mehrlagig ist und eine oder mehrere Lagen aus einem metallischen Material und eine oder mehrere Lagen aus dem Polymermaterial umfasst. Insbesondere ist eine Lage aus dem metallischen Material alternierend mit einer Lage aus dem Polymermaterial angeordnet. Hierbei ist das Polymermaterial insbesondere ein Polymermatrixmaterial und umfasst ein Fasermaterial.

Als Lagen aus einem metallischen Material haben sich Lagen aus Kupfer als besonders geeignet erwiesen.

Vorzugsweise ist und/oder wird das Leiterplattenelement spanend bearbeitet. Beispielsweise ist und/oder wird das Leiterplattenelement durch Fräsen bearbeitet.

Vorteilhaft kann es sein, wenn das Leiterplattenelement ein oder mehrere Funktionselemente aufweist. Das eine oder die mehreren Funktionselemente sind insbesondere ausgewählt aus: einem Sensorelement, insbesondere einem Temperatursensor und/oder einem Drucksensor, einem Ausgleichsregelelement, einem Überwachungselement, einem Verbindungselement.

Ergänzend oder alternativ können ein oder mehrere Funktionselemente Spannungserfassungselemente zur Spannungserfassung an dem einen oder den mehreren ersten Anschlusselementen und/oder dem einen oder den mehreren zweiten Anschlusselementen sein.

Das eine oder die mehreren Ausgleichsregelelemente sind vorzugsweise ein oder mehrere Balancing-Widerstände und/oder fungieren als ein oder mehrere Ladungsverteilungselemente, mittels welchem/welchen insbesondere elektrische Ladung gleichmäßig über mit dem Ausgleichsregelelement verbundene elektrochemische Zellen verteilt ist und/oder wird.

Das eine oder die mehreren Überwachungselemente sind vorzugsweise eine oder mehrere Schaltungsanordnungen zur Überwachung, beispielsweise eine oder mehrere "Cell Supervision Circuit"(CSC)-Platinen.

Es kann vorgesehen sein, dass das eine oder die mehreren Überwachungselemente ein oder mehrere "Controller Area Network"(CAN)-Elemente und/oder ein oder mehrere Microcontroller-Elemente und/oder ein oder mehrere "Serial Peripheral Interface"(isoSPI)-Elemente umfassen.

Das eine oder die mehreren isoSPI-Elemente bilden vorzugsweise eine oder mehrere Schnittstellen und/oder Verbindungsstellen mehrerer Schaltungen.

Vorteilhaft kann es sein, wenn das Leiterplattenelement ein oder mehrere der folgenden Merkmale und/oder Eigenschaften aufweist:
- eine hohe thermische Beständigkeit, beispielsweise von 200 °C oder mehr; und/oder
- das Leiterplattenelement bildet eine Hitzebarriere gegenüber einer Umgebung der elektrochemischen Speichereinheit; und/oder
- ein geringes Gewicht oder ein Gewicht, das vergleichbar mit einem Gewicht eines metallischen Bauteils mit denselben Abmessungen ist; und/oder
- es ist ein geringer Materialeinsatz notwendig, aufgrund einer vergleichsweise geringen Dicke des Leiterplattenelements; und/oder
- eine hohe elektrische Durchschlagfestigkeit, beispielsweise ca. 20 kV/mm; und/oder
- eine hohe mechanische Stabilität, insbesondere aufgrund der Verwendung des Fasermaterials; und/oder
- eine Verbesserung des Brandschutzes aufgrund hoher Temperaturbeständigkeit; und/oder
- es können elektronische Bauteile in das Leiterplattenelement integriert sein und/oder werden.

Beispielsweise bildet das Leiterplattenelement einen Berührschutz.

Die Erfindung betrifft ferner ein elektrochemisches Speichersystem, umfassend eine oder mehrere erfindungsgemäße elektrochemische Speichereinheiten.

Beispielsweise ist das elektrochemische Speichersystem ein Batteriespeicher und/oder ein Akkumulatorspeicher.

Das elektrochemische Speichersystem weist vorzugsweise ein oder mehrere Merkmale und/oder einen oder mehrere Vorteile der elektrochemischen Speichereinheit auf.

Die Erfindung betrifft ferner ein Verfahren zur Herstellung einer elektrochemischen Speichereinheit, insbesondere einer erfindungsgemäßen elektrochemischen Speichereinheit.

Das Verfahren umfasst das Verbinden eines Strömungsführungselements mit einer oder mehreren elektrochemischen Zellen, wobei jede elektrochemische Zelle ein erstes Anschlusselement und/oder ein zweites Anschlusselement umfasst, an denen eine elektrische Spannung abgreifbar ist.

Das Strömungsführungselement umfasst vorzugsweise ein Leiterplattenelement oder ist und/oder wird daraus gebildet. Das Leiterplattenelement umfasst insbesondere ein Polymermaterial.

Durch das Verbinden werden vorzugsweise auf einer der einen oder den mehreren elektrochemischen Zellen zugewandten Seite des Leiterplattenelements ein oder mehrere Strömungskanäle und/oder ein oder mehrere Strömungsleitelemente zur Führung eines aus zumindest einer der einen oder der mehreren elektrochemischen Zellen austretenden Fluids ausgebildet.

Das erfindungsgemäße Verfahren weist vorzugsweise ein oder mehrere Merkmale und/oder einen oder mehrere Vorteile der erfindungsgemäßen elektrochemischen Speichereinheit auf.

Vorzugsweise ist und/oder wird jeweils eine Durchkontaktierung von einer der einen oder den mehreren elektrochemischen Zellen abgewandten Seite des Leiterplattenelements und einer der einen oder den mehreren elektrochemischen Zellen zugewandten Seite des Leiterplattenelements ausgebildet.

Mittels der einen oder der mehreren Durchkontaktierungen ist vorzugsweise ein elektrischer Kontakt zwischen einem oder mehreren ersten Anschlusselementen und einer der einen oder den mehreren elektrochemischen Zellen abgewandten Seite des Leiterplattenelements ausgebildet.

Insbesondere ist mittels der einen oder der mehreren Durchkontaktierung ein elektrischer Kontakt zwischen einem oder mehreren zweiten Anschlusselementen und einer der einen oder den mehreren elektrochemischen Zellen abgewandten Seite des Leiterplattenelements ausgebildet.

Beispielsweise sind und/oder werden mittels der einen oder der mehreren Durchkontaktierungen das eine oder die mehreren ersten Anschlusselemente der einen oder der mehreren elektrochemischen Zellen mit einer auf der der einen oder den mehreren elektrochemischen Zellen abgewandten Seite des Leiterplattenelements festgelegten Leiterbahn elektrisch kontaktiert.

Vorzugsweise sind und/oder werden mittels der einen oder der mehreren Durchkontaktierungen das eine oder die mehreren zweiten Anschlusselemente der einen oder der mehreren elektrochemischen Zellen mit einer auf der der einen oder den mehreren elektrochemischen Zellen abgewandten Seite des Leiterplattenelements festgelegten Leiterbahn elektrisch kontaktiert.

So ist und/oder wird vorzugsweise ein elektrischer Kontakt zwischen den mehreren oder sämtlichen ersten Anschlusselementen zueinander und/oder den mehreren oder sämtlichen zweiten Anschlusselementen zueinander ausgebildet.

Insbesondere sind und/oder werden mittels der einen oder der mehreren Leiterbahnen ein oder mehrere erste Anschlusselemente mit einem oder mehreren zweiten Anschlusselementen der einen oder der mehreren elektrochemischen Zellen elektrisch kontaktiert.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung eines elektrochemischen Speichersystems, umfassend eine erste Ausführungsform einer elektrochemischen Speichereinheit, welche acht elektrochemische Zellen umfasst, die mittels eines Strömungsführungselements der elektrochemischen Speichereinheit mechanisch und/oder elektrisch miteinander verbunden sind, wobei das Strömungsführungselement ein Leiterplattenelement umfasst;
- Fig. 2: eine schematische Draufsicht auf ein Deckelement einer elektrochemischen Zelle der elektrochemischen Speichereinheit aus Fig. 1, welche eine Sollbruchstelle in Form eines Berstelements aufweist;
- Fig. 3: eine schematische Draufsicht auf das Strömungsführungselement der elektrochemischen Speichereinheit aus Fig. 1;
- Fig. 4: eine schematische Schnittansicht der ersten Ausführungsform einer elektrochemischen Speichereinheit aus den Fig. 1 bis 3;
- Fig. 5: eine schematische Schnittansicht einer zweiten Ausführungsform einer elektrochemischen Speichereinheit, bei welcher das Leiterplattenelement zumindest zwei flexible Bereiche aufweist, welche parallel zueinander angeordnet sind und einen Mittelbereich des Leiterplattenelements seitlich begrenzen, in einem Grundzustand;
- Fig. 6: eine schematische Schnittansicht der elektrochemischen Speichereinheit aus Fig. 5 in einem gedehnten Zustand des Leiterplattenelements;
- Fig. 7: eine schematische Schnittansicht einer dritten Ausführungsform einer elektrochemischen Speichereinheit, bei welcher mehrere erste Anschlusselemente und mehrere zweite Anschlusselemente der mehreren elektrochemischen Zellen in das Leiterplattenelement integriert sind und bei welcher das Leiterplattenelement mindestens eine Sollbruchstelle aufweist, in einem Grundzustand des Leiterplattenelements;
- Fig. 8: eine schematische Schnittansicht der elektrochemischen Speichereinheit aus Fig. 7 in einem Zustand nach einem Brechen der mindestens einen Sollbruchstelle, so dass jeweils die ersten Anschlusselemente und die zweiten Anschlusselemente elektrisch voneinander getrennt sind;
- Fig. 9: eine schematische Draufsicht auf eine Variante der elektrochemischen Speichereinheit gemäß Fig. 7, bei welcher mehrere elektrochemische Zellen seriell miteinander verschaltet sind;
- Fig. 10: eine schematische Draufsicht auf die elektrochemische Speichereinheit aus Fig. 9 nach einem Brechen und/oder Reißen mindestens einer Sollbruchstelle, so dass mindestens eine elektrochemische Zelle elektrisch von den anderen elektrochemischen Zellen getrennt ist;
- Fig. 11: eine schematische Draufsicht auf weitere eine Variante der elektrochemischen Speichereinheit gemäß Fig. 7, bei welcher mehrere elektrochemische Zellen in einer Parallelschaltung miteinander verbunden sind;
- Fig. 12: eine schematische Draufsicht auf die elektrochemische Speichereinheit aus Fig. 11 nach einem Brechen und/oder Reißen mindestens einer Sollbruchstelle, so dass mindestens eine elektrochemische Zelle elektrisch von den anderen getrennt ist; und
- Fig. 13: eine schematische Schnittansicht einer vierten Ausführungsform einer elektrochemischen Speichereinheit, bei welcher das Leiterplattenelement gewölbt und/oder gekrümmt ausgebildet ist, wobei die Wölbung und/oder Krümmung des Leiterplattenelements ein Strömungsleitelement bildet.

Gleiche oder funktional äquivalente Elemente sind in sämtlichen Figuren mit denselben Bezugszeichen versehen.

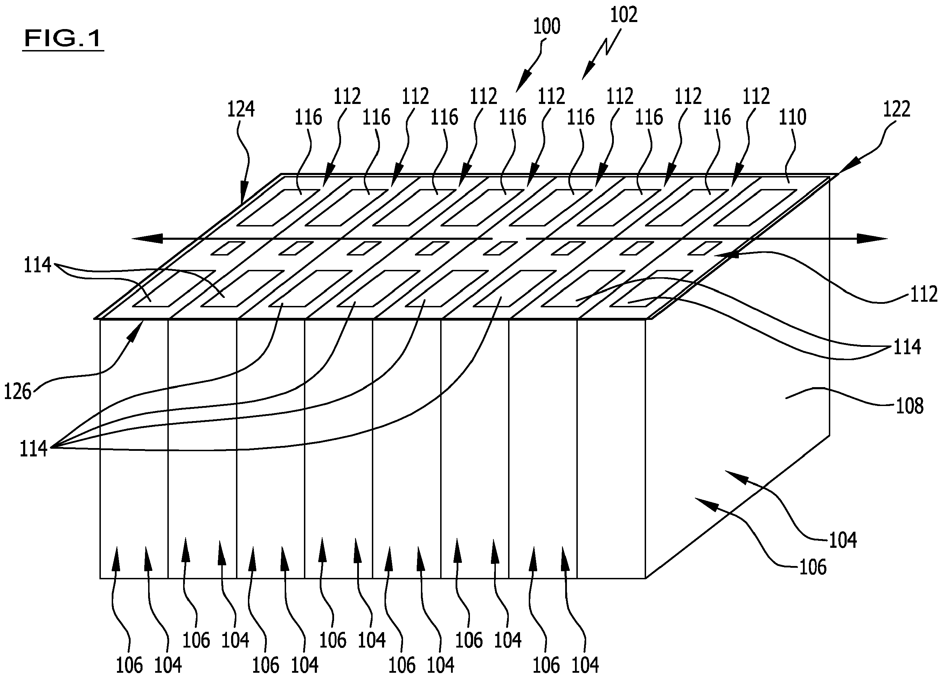

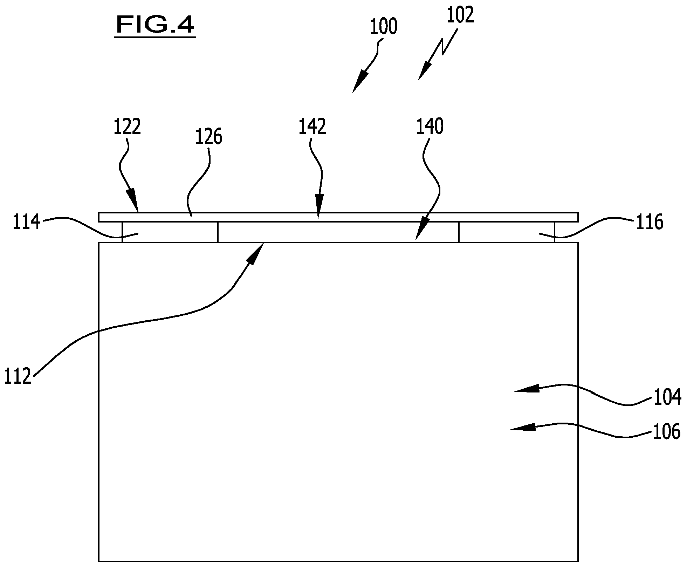

Eine in den Fig. 1 bis 4 dargestellte erste Ausführungsform einer als Ganzes mit 100 bezeichneten elektrochemischen Speichereinheit bildet vorliegend einen Bestandteil eines elektrochemischen Speichersystems 102.

Das elektrochemische Speichersystem 102 wird vorzugsweise in Fahrzeugen verwendet.

Das elektrochemische Speichersystem 102 ist beispielsweise ein Batteriespeicher und/oder ein Akkumulatorspeicher.

Vorzugsweise umfasst das elektrochemische Speichersystem 102 eine oder mehrere elektrochemische Speichereinheiten 100.

Die elektrochemische Speichereinheit 100 ist vorzugsweise ein Batteriemodul und/oder ein Akkumulatormodul. Die elektrochemische Speichereinheit 100 umfasst vorzugsweise eine oder mehrere - vorliegend mehrere - elektrochemische Zellen 104.

Vorzugsweise sind die elektrochemischen Zellen 104 Lithium-Ionen-Batterien und/oder Lithium-Ionen-Akkumulatoren.

Günstig kann es sein, wenn die elektrochemischen Zellen 104 prismatische elektrochemische Zellen sind.

Vorteilhaft kann es sein, wenn die elektrochemischen Zellen 104 jeweils ein zumindest näherungsweise quaderförmig ausgebildetes Gehäuse 106 umfassen, welches einen Innenraum umgibt.

Das Gehäuse 106 umfasst insbesondere ein erstes Gehäusebauteil 108, welches wannenförmig oder becherförmig ausgebildet ist, und ein zweites Gehäusebauteil 110, welches das erste Gehäusebauteil 108 abdeckt, so dass insbesondere der Innenraum der elektrochemischen Zelle 104 fluiddicht umschlossen ist.

Das zweite Gehäusebauteil 110 des Gehäuses 106 der elektrochemischen Zelle 104 ist vorzugsweise als Deckelelement 112 ausgebildet.

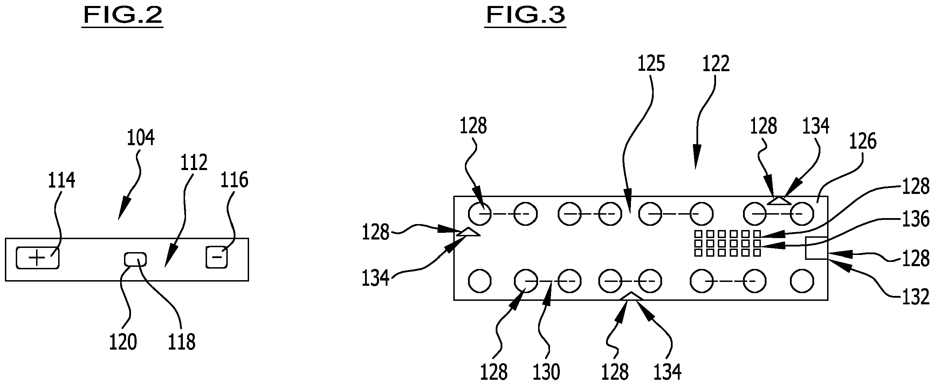

Wie insbesondere in Fig. 2 zu sehen ist, weisen die elektrochemischen Zellen 104 vorzugsweise ein erstes Anschlusselement 114 und ein zweites Anschlusselement 116 auf, an welchen eine Spannung anlegbar und/oder abgreifbar ist.

Bei alternativen Ausführungsformen der elektrochemischen Zelle 104 kann vorgesehen sein, dass die elektrochemischen Zellen 104 jeweils nur ein erstes Anschlusselement 114 und/oder zweites Anschlusselement 116 umfassen.

Alternativ zu einer Ausbildung der elektrochemischen Zellen 104 als prismatische Zellen kann vorgesehen sein, dass die elektrochemischen Zellen 104 Rundzellen oder Pouch-Zellen sind.

Die elektrochemischen Zellen 104 weisen vorzugsweise jeweils mindestens eine Sollbruchstelle 118 auf, welche in das Deckelelement 112 der jeweiligen elektrochemischen Zelle 104 eingebracht sind und/oder einen Bestandteil davon bildet.

Das erste Anschlusselement 114 und das zweite Anschlusselement 116 sind vorzugsweise in einer Draufsicht an einander gegenüberliegenden Seiten des Deckelelements 112 an dem Deckelelement 112 festgelegt oder bilden einen Bestandteil davon.

Die mindestens eine Sollbruchstelle 118 bricht vorzugsweise bei einem Übersteigen einer kritischen Temperatur und/oder eines kritischen Drucks in dem Innenraum der jeweiligen elektrochemischen Zelle 104.

Günstig kann es sein, wenn die Sollbruchstelle 118 mittig zwischen dem ersten Anschlusselement 114 und dem zweiten Anschlusselement 116 in dem Deckelelement 112 angeordnet ist.

Beispielsweise ist die mindestens eine Sollbruchstelle 118 mindestens ein Berstelement 120.

Günstig kann es sein, wenn die mindestens eine Sollbruchstelle 118 eine Materialschwachstelle des Materials des Deckelelements 112 bildet.

In den Innenräumen der elektrochemischen Zellen 104 finden vorzugsweise elektrochemische Redoxreaktionen statt, bei denen gespeicherte chemische Energie in elektrische Energie umgewandelt wird oder umgekehrt.

Hierbei kann es aufgrund eines sich selbst verstärkenden Wärme produzierenden Prozesses zu einer Überhitzung kommen, welche auch als "thermischer Event" und/oder "thermal runaway" bezeichnet wird.

Bei einem sogenannten "thermischen Event" und/oder einem "thermal runaway" kommt es insbesondere zu erhöhten Temperaturen und/oder zu einem erhöhten Druck in dem Innenraum der jeweiligen elektrochemischen Zelle 104. Eine Propagation der Überhitzung auf benachbarte elektrochemische Zellen 104 und/oder benachbarte elektrochemische Speichereinheiten 102 sollte vermieden werden.

Zur Vermeidung einer Überhitzung in einer elektrochemischen Zelle 104 kann vorgesehen sein, dass, wenn eine Innenraumtemperatur in einer elektrochemischen Zelle 104 die kritische Temperatur und/oder wenn ein Innenraumdruck in einer elektrochemischen Zelle 104 den kritischen Druck übersteigt, die mindestens eine Sollbruchstelle 118 birst.

Durch das Bersten der mindestens einen Sollbruchstelle 118 kann das Fluid, beispielsweise in Form eines in der elektrochemischen Zelle 104 entstehenden Gases und/oder einer Flüssigkeit, aus der jeweiligen elektrochemischen Zelle 104 austreten und/oder entweichen.

Zur Führung und/oder Ableitung aus dem Innenraum der jeweiligen elektrochemischen Zelle 104 austretenden Fluids umfasst die elektrochemische Speichereinheit 100 vorzugsweise ein Strömungsführungselement 122.

Vorteilhaft kann es sein, wenn das Strömungsführungselement 122 ein Abdeckelement 124 der elektrochemischen Speichereinheit 100 oder einen Bestandteil davon bildet. Beispielsweise ist das Strömungsführungselement 122 ein Deckel oder ein Bestandteil des Deckels.

Das Strömungsführungselement 122 ist vorzugsweise zumindest näherungsweise plattenförmig ausgebildet und/oder weist eine Haupterstreckungsebene auf, welche zumindest näherungsweise parallel zu einer Haupterstreckungsebene der Deckelelemente 112 der elektrochemischen Zellen 104 angeordnet ist.

Das Strömungsführungselement 122 dient vorzugsweise einer Aufnahme der elektrochemischen Zellen 104 und/oder einer Strömungsführung aus einer oder mehreren elektrochemischen Zellen 104 austretenden Fluids und/oder einer mechanischen und/oder elektrischen Kontaktierung der elektrochemischen Zellen 104.

Die Strömung des aus einer oder mehreren elektrochemischen Zellen 104 austretenden Fluids ist in Fig. 1 durch Pfeile schematisch angedeutet.

Durch die Anordnung des Strömungsführungselements 122 relativ zu den elektrochemischen Zellen 104 weist die Strömung des aus einer oder mehreren elektrochemischen Zellen 104 austretenden und/oder entweichenden Fluids insbesondere eine Vorzugsrichtung auf.

Vorteilhaft kann es sein, wenn das Strömungsführungselement 122 ein Leiterplattenelement 126 umfasst oder daraus gebildet ist. Das Leiterplattenelement 126 umfasst vorzugsweise eine oder mehrere Leiterplatten.

Das Leiterplattenelement 126 bildet vorzugsweise ein Hitzeschild und/oder einen Berührschutz.

Beispielsweise umfasst das Leiterplattenelement 126 eine oder mehrere sogenannte "FR4-Leiterplatten".

Das Leiterplattenelement 126 ist vorzugsweise ein Träger für elektronische Bauteile. Es dient insbesondere einer mechanischen Befestigung und/oder elektrischen Verbindung der ersten Anschlusselemente 114 und/oder der zweiten Anschlusselemente 116 der elektrochemischen Zellen 104.

Eine elektrische Durchschlagfestigkeit des Strömungsführungselements 122 liegt vorzugsweise in einem Bereich von ca. 18 kV/mm bis ca. 50 kV/mm, insbesondere bestimmt bei ca. 23 °C.

Die elektrische Durchschlagfestigkeit wird insbesondere gemäß einer der Normen der Normenreihe IEC 60243 bestimmt.

Vorzugsweise erfüllt das Strömungsführungselement 122 die Spezifikationen gemäß IPC 4101 (C).

Beispielsweise weist das Strömungsführungselement 122, insbesondere bei einer Dicke von ca. 0,5 mm oder mehr, eine elektrische Durchschlagfestigkeit von ca. 30 kV/mm oder mehr auf.

Die Dicke ist vorzugsweise parallel zu einer Haupterstreckungsrichtung des Strömungsführungselement 122 definiert.

Das Leiterplattenelement 126 umfasst vorzugsweise ein Polymermaterial, welches insbesondere als Polymermatrixmaterial ausgebildet ist und/oder ein Fasermaterial umfasst.

Als Polymermaterial und/oder als Polymermatrixmaterial sind insbesondere ein thermoplastisches Polymermaterial und/oder ein elastomeres Polymermaterial und/oder ein duroplastisches Polymermaterial, insbesondere ein Epoxidharzpolymermaterial, geeignet.

Vorzugsweise werden das Polymermaterial und/oder das Polymermatrixmaterial aus einem Polyolefin, beispielsweise Polypropylen, hergestellt.

Das Fasermaterial umfasst vorzugsweise Glasfasern oder ist daraus gebildet.

Günstig kann es sein, wenn das Fasermaterial, beispielsweise Glasfasern, homogen in dem Polymermatrixmaterial verteilt und/oder darin eingebettet ist.

Glasfasern weisen vorzugsweise eine Temperaturbeständigkeit von ca. 1000 °C oder mehr, insbesondere von ca. 2000 °C oder mehr, auf. Die Verwendung von Glasfasern kann sich vorteilhaft auf die Temperaturbeständigkeit des Leiterplattenelements 126 insgesamt auswirken.

Fasern des Fasermaterials weisen vorzugsweise Haupterstreckungsrichtungen auf, welche zumindest näherungsweise parallel zueinander angeordnet sind.

Die Haupterstreckungsrichtungen der Fasern und/oder eine Vorzugsrichtung des Fasermaterials ist vorzugsweise zumindest näherungsweise parallel zu einer Haupterstreckungsebene des Leiterplattenelements 126 angeordnet.

Für eine optimierte Stabilität des Leiterplattenelements 126 kann es vorteilhaft sein, wenn das Fasermaterial Endlosfasern umfasst oder daraus gebildet ist.

Als "Endlosfasern" werden vorzugsweise Fasern mit einer Länge von ca. 50 mm oder mehr bezeichnet.

Ein Anteil des Fasermaterials beträgt vorzugsweise ca. 10 Gew.-% oder mehr, insbesondere ca. 20 Gew.-% oder mehr, beispielsweise ca. 30 Gew.-% oder mehr, bezogen auf eine Gesamtmasse aus dem Polymermatrixmaterial und dem Fasermaterial.

Vorzugsweise beträgt der Anteil des Fasermaterials in dem Leiterplattenelement 126 ca. 90 Gew.-% oder weniger, insbesondere ca. 80 Gew.-% oder weniger, beispielsweise ca. 70 Gew.-% oder weniger, bezogen auf die Gesamtmasse aus dem Polymermatrixmaterial und dem Fasermaterial.

Es kann vorgesehen sein, dass das Leiterplattenelement 126 aus einem oder mehreren sogenannten "Prepregs" hergestellt ist und/oder wird. Hierbei sind vorzugsweise Fasern in einer Mischung aus einem Harzmaterial imprägniert.

Beispielsweise wird eine Mischung aus einem Harzmaterial und einem Härter zur Imprägnierung eingesetzt.

Für eine optimierte Aushärtereaktion kann es vorteilhaft sein, wenn zusätzlich ein Reaktionsbeschleuniger eingesetzt wird.

Das Harzmaterial, insbesondere die Mischung aus dem Harzmaterial und dem Härter und insbesondere dem Reaktionsbeschleuniger, bilden vorzugsweise nach der Aushärtereaktion das Polymermatrixmaterial.

Die Aushärtereaktion wird vorzugsweise unter erhöhter Temperatur und/oder erhöhtem Druck durchgeführt.

Eine Einsatztemperatur der Prepregs und/oder des Leiterplattenelements 126 liegt vorzugsweise in einem Bereich von ca. 150 °C oder mehr, insbesondere in einem Bereich von ca. 155 °C oder mehr.

Eine Einsatztemperatur der sogenannten Prepregs liegt vorzugsweise in einem Bereich von ca. 200 °C oder weniger, insbesondere von ca. 190 °C oder weniger.

Vorzugsweise weisen das Harzmaterial und/oder das Polymermatrixmaterial einen Schmelzflussindex von ca. 400 (cm³/10 min) oder mehr, insbesondere von ca. 700 (cm³/10 min) oder mehr, beispielsweise von ca. 1200 (cm³/10 min) oder mehr, auf.

Insbesondere weisen das Harzmaterial und/oder das Polymermatrixmaterial einen Schmelzflussindex von ca. 400 (g/10 min) oder mehr, insbesondere von ca. 700 (g/10 min) oder mehr, beispielsweise von ca. 1200 (g/10 min) oder mehr, auf.

Der Schmelzflussindex ist vorzugsweise gemäß der Norm ISO 1133 bestimmt.

Die angegebenen Werte für den Schmelzflussindex sind vorzugsweise auf eine Prüftemperatur von ca. 190 °C und eine Prüfmasse von ca. 5 kg bezogen.

Der Schmelzflussindex wird vorzugsweise mittels eines Kapillarrheometers bestimmt.

Günstig kann es sein, wenn eine Biegefestigkeit des Leiterplattenelements 126 bei ca. 180 MPa oder mehr, insbesondere bei ca. 200 MPa oder mehr liegt.

Die Biegefestigkeit des Leiterplattenelements 126 liegt vorzugsweise bei ca. 300 MPa oder weniger, insbesondere bei ca. 250 MPa oder weniger.

Die Biegefestigkeit ist vorzugsweise gemäß der Norm DIN EN ISO 14125:2011-05 bestimmt.

Durch die optimierte Biegefestigkeit des Leiterplattenelements 126 hat die elektrochemische Speichereinheit 100 vorzugsweise eine erhöhte mechanische Stabilität.

Das Leiterplattenelement 126 kann vorzugsweise Querkräfte aufnehmen, so dass ein Krafteintrag auf die elektrochemischen Zellen 104 reduziert ist.

Es kann vorgesehen sein, dass das Leiterplattenelement 126 mehrlagig aufgebaut ist und eine oder mehrere Lagen aus einem metallischen Material, beispielsweise Kupfer, und eine oder mehrere Lagen aus dem Polymermaterial umfasst.

Das Polymermaterial ist auch in Ausführungsformen, in welchen das Leiterplattenelement 126 mehrlagig ist, vorzugsweise ein Polymermatrixmaterial, welches ein Fasermaterial umfasst.

Günstig kann es sein, wenn in mehrlagigen Ausführungsformen des Leiterplattenelements 126 zumindest eine Lage aus dem Polymermaterial alternierend mit zwei Lagen aus dem metallischen Material angeordnet ist oder umgekehrt.

Vorzugsweise sind sämtliche Lagen aus dem Polymermaterial und aus dem metallischen Material in alternierender Reihenfolge angeordnet.

Vorzugsweise sind auf einer den elektrochemischen Zellen 104 abgewandten Seite des Leiterplattenelements 126 eine oder mehrere Leiterbahnen 125, insbesondere aus einem metallischen Material, auf eine Oberfläche des Leiterplattenelements 126 festgelegt.

Die eine oder die mehreren Leiterbahnen 125 sind beispielsweise aufgedruckt oder festgeklebt.

Die eine oder die mehreren Leiterbahnen 125 dienen vorzugsweise einer elektrischen Kontaktierung der ersten Anschlusselemente 114 und der zweiten Anschlusselemente 116 der elektrochemischen Zellen 104.

Hierzu ist vorzugsweise jeweils eine Durchkontaktierung in dem Leiterplattenelement 126 ausgebildet, welche sich durch das Leiterplattenelement hindurch erstreckt und einen elektrischen Kontakt des jeweiligen Anschlusselements 114, 116 und der jeweiligen Leiterbahn 125 bildet.

Wie insbesondere in Fig. 3 zu sehen ist, weist das Leiterplattenelement 126 vorzugsweise ein oder mehrere Funktionselemente 128 auf.

Es kann vorgesehen sein, dass ein oder mehrere Funktionselemente 128 als Verbindungselemente 130 ausgebildet sind, welche insbesondere einer elektrischen und/oder mechanischen Kontaktierung benachbarter erster Anschlusselemente 114 und/oder benachbarter zweiter Anschlusselemente 116 dienen.

Das eine oder die mehreren Verbindungselemente 130 sind vorzugsweise aus einem metallischen Material.

Beispielsweise sind das eine oder die mehreren Verbindungselemente 130 als eine oder mehrere Lagen in ein mehrlagig ausgebildetes Leiterplattenelement 126 integriert.

Ergänzend oder alternativ kann vorgesehen sein, dass das eine oder die mehreren Verbindungselemente 130 kraftschlüssig und/oder formschlüssig und/oder stoffschlüssig mit einem oder mehreren ersten Anschlusselementen 114 und/oder mit einem oder mehreren zweiten Anschlusselementen 116 verbunden sind. Beispielsweise sind ein oder mehrere Verbindungselemente 130 an zwei ersten Anschlusselementen 114 und/oder an zwei zweiten Anschlusselementen 116 festgeschraubt.

Es kann vorgesehen sein, dass ein oder mehrere Funktionselemente 126 als ein oder mehrere Überwachungselemente 132 ausgebildet sind. Das eine oder die mehreren Überwachungselemente 132 umfassen vorzugsweise eine Schaltung zur Überwachung einer oder mehrerer elektrochemischer Zellen 104, beispielsweise einen sogenannten "Cell Supervision Circuit" (CSC).

Beispielsweise sind das eine oder die mehreren Überwachungselemente 132 als CSC-Platinen ausgebildet, welche insbesondere mit einer Steckverbindung mit einem Grundkörper des Leiterplattenelements 126 verbunden sind.

Vorzugsweise umfassen das eine oder die mehreren Überwachungselemente 132 ein oder mehrere CAN(Controller Area Network)-Elemente und/oder ein oder mehrere Microcontroller-Elemente und/oder ein oder mehrere isoSPICSerial Peripheral Interface)-Elemente.

Ein isoSPI-Element dient vorzugsweise einer Verbindung mehrerer Schaltungen.

Günstig kann es sein, wenn ein oder mehrere Funktionselemente 126 ein oder mehrere Sensorelemente 134 sind, beispielsweise ein oder mehrere Temperatursensoren und/oder ein oder mehrere Drucksensoren.

Es kann vorgesehen sein, dass ein oder mehrere Funktionselemente 128 ein oder mehrere Ausgleichsregelelemente 136 sind. Beispielsweise umfassen das ein oder die mehreren Ausgleichsregelelemente 136 ein oder mehrere elektrische Schaltungen, welche insbesondere einer gleichmäßigen elektrischen Ladungsverteilung dienen.

Das eine oder die mehreren Ausgleichsregelelemente 136 sind beispielsweise ein oder mehrere Balancing-Widerstände.

Auf einer den elektrochemischen Zellen 104 zugewandten Seite des Leiterplattenelements 126 sind vorzugsweise ein oder mehrere - vorliegend ein - Strömungskanäle 140 angeordnet und/oder ausgebildet.

Das Leiterplattenelement 126 umfasst vorzugsweise ein Strömungsleitelement 142, welches die Strömung des aus einer oder mehreren elektrochemischen Zellen austretenden Fluids gezielt führt und/oder leitet und/oder ablenkt. Alternativ bildet das Leiterplattenelement 126 das Strömungsleitelement 142.

In der ersten Ausführungsform der elektrochemischen Speichereinheit 100 bildet vorzugsweise das Leiterplattenelement 126 als Ganzes das Strömungsleitelement 142.

Es kann vorgesehen sein, dass weitere Strömungsleitelemente 142, beispielsweise in Form von Strömungsleitrippen, in das Leiterplattenelement 126 eingeformt sind (nicht gezeigt).

Aufgrund der Anordnung des Leiterplattenelements 126 wird die Strömung des aus einer oder mehreren elektrochemischen Zellen 104 austretenden Fluids vorzugsweise in einer Richtung geführt, welche zumindest näherungsweise parallel zu einer Haupterstreckungsebene des Leiterplattenelements 126 angeordnet ist.

Die Strömung wird insbesondere zu einander gegenüberliegenden Randbereichen der elektrochemischen Speichereinheit 100 geführt.

Der Strömungskanal 140 wird vorzugsweise von einer den elektrischen Zellen 104 zugewandten Unterseite des Leiterplattenelements 126, den Deckelelementen 112 der elektrochemischen Zellen 104 und den ersten Anschlusselementen 114 und den zweiten Anschlusselementen 116 der elektrochemischen Zellen 104 gebildet.

Durch den Strömungskanal 140 ist vorzugsweise eine geführte Entgasung und/oder eine kontrollierte Entgasung ausgebildet.

Zur Herstellung der elektrochemischen Speichereinheit 100 wird vorzugsweise das Strömungsführungselement 122 derart relativ zu den elektrochemischen Zellen 104 positioniert, dass Durchkontaktierungen in dem Leiterplattenelement 126 an den ersten Anschlusselementen 114 und den zweiten Anschlusselementen 116 der elektrochemischen Zellen 104 angeordnet sind.

Anschließend wird das Strömungsführungselement 122 vorzugsweise formschlüssig und/oder kraftschlüssig und/oder stoffschlüssig mit den elektrochemischen Zellen 104 verbunden.

Das Leiterplattenelement 126 wird vorzugsweise spanend bearbeitet. Beispielsweise wird es durch Fräsen in eine gewünschte Form gebracht.

Es kann vorgesehen sein, dass Durchkontaktierungen durch spanende Bearbeitung, beispielsweise Fräsen, ausgebildet werden.

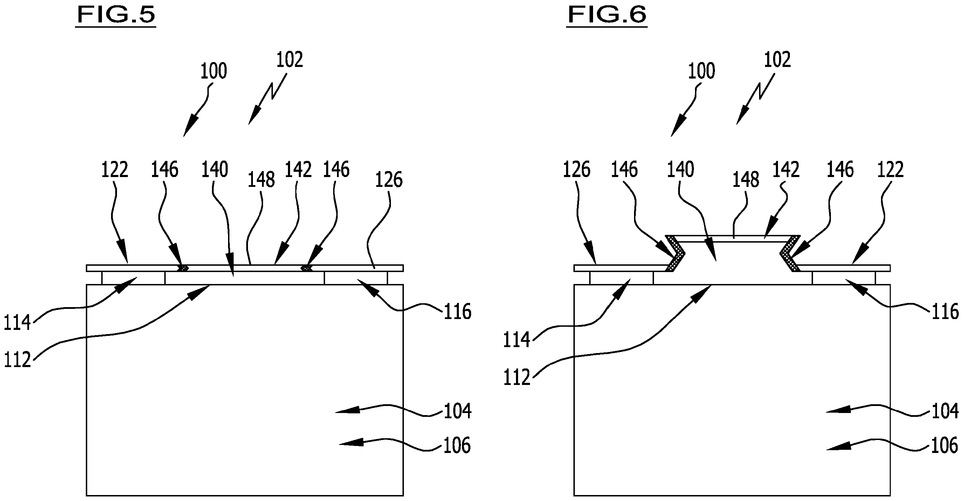

Eine in den Fig. 5 und 6 dargestellte zweite Ausführungsform einer elektrochemischen Speichereinheit 100 unterscheidet sich hinsichtlich Aufbau und Funktion im Wesentlichen dadurch von der in den Fig. 1 bis 4 dargestellten ersten Ausführungsform, dass das Leiterplattenelement 126 einen oder mehrere - vorliegend zwei - flexible Bereiche 146 aufweist, in welchen das Leiterplattenelement bei steigendem Druck in einem zwischen dem Leiterplattenelement 126 und dem Deckelelement 112 der elektrochemischen Zellen 104 ausgebildeten Strömungskanal 140 von den Deckelelementen 112 der elektrochemischen Zellen 104 wegbewegbar ist und/oder sich wegwölbt.

Alternativ kann vorgesehen sein, dass das Leiterplattenelement 126 vollständig flexibel ausgebildet ist.

"Flexibel" bedeutet vorzugsweise, dass sich das Leiterplattenelement 126 in den flexiblen Bereichen 146 um ca. 10 % oder mehr eines Abstands zwischen dem Leiterplattenelement 126 und den Deckelementen 112 der elektrochemischen Zellen 104, insbesondere um ca. 15 % des Abstands oder mehr, beispielsweise um ca. 20 % des Abstands oder mehr, ausdehnbar und/oder bewegbar ist.

"Flexibel" bedeutet vorzugsweise, dass sich das Leiterplattenelement 126 in den flexiblen Bereichen 146 um ca. 90 % oder weniger des Abstands zwischen dem Leiterplattenelement 126 und den Deckelementen 112 der elektrochemischen Zellen 104, insbesondere um ca. 70 % des Abstands oder weniger, beispielsweise um ca. 60 % des Abstands oder weniger, ausdehnbar und/oder bewegbar ist.

Günstig kann es sein, wenn die flexiblen Bereiche 146 länglich ausgebildet sind und/oder eine Längsachse aufweisen, welche im Wesentlichen senkrecht zu den Hauptseiten der elektrochemischen Zellen 104 angeordnet ist.

Vorteilhaft kann es sein, wenn zwei flexible Bereiche 146 in dem Leiterplattenelement 126 ausgebildet sind, welche einen Mittelbereich 148 des Leiterplattenelements 126 umgeben und/oder seitlich begrenzen.

Der Mittelbereich 148 ist vorzugsweise mittig zwischen den jeweiligen ersten Anschlusselementen 114 und zweiten Anschlusselementen 116 der elektrochemischen Zellen 104 angeordnet.

In Fig. 5 ist das Leiterplattenelement 126 in einem Grundzustand dargestellt, während es in Fig. 6 in einem gedehnten Zustand gezeigt ist.

In dem gedehnten Zustand ist der Mittelbereich 148, insbesondere aufgrund der Ausdehnung der flexiblen Bereiche 146, von den Deckelelementen 112 der elektrochemischen Zellen 104 wegbewegt und/oder weiter von den Deckelelementen 112 der elektrochemischen Zellen 104 beabstandet als die restlichen Bereiche des Leiterplattenelements 126.

Durch die Dehnung des Leiterplattenelements 126 im Bereich der flexiblen Bereiche 146 wird der Querschnitt des Strömungskanals 140 vorzugsweise vergrößert. Dies kann eine Ableitung des aus den elektrochemischen Zellen 104 austretenden Fluids beschleunigen und insbesondere eine Brandgefahr weiter reduzieren.

Der Querschnitt ist vorzugsweise parallel zu Haupterstreckungsebenen der Hauptseiten der elektrochemischen Zellen 104 genommen.

Im Übrigen stimmt die in den Fig. 5 und 6 dargestellte zweite Ausführungsform einer elektrochemischen Speichereinheit 100 hinsichtlich Aufbau und Funktion im Wesentlichen mit der in den Fig. 1 bis 4 dargestellten ersten Ausführungsform überein, so dass auf deren Beschreibung insoweit Bezug genommen wird.

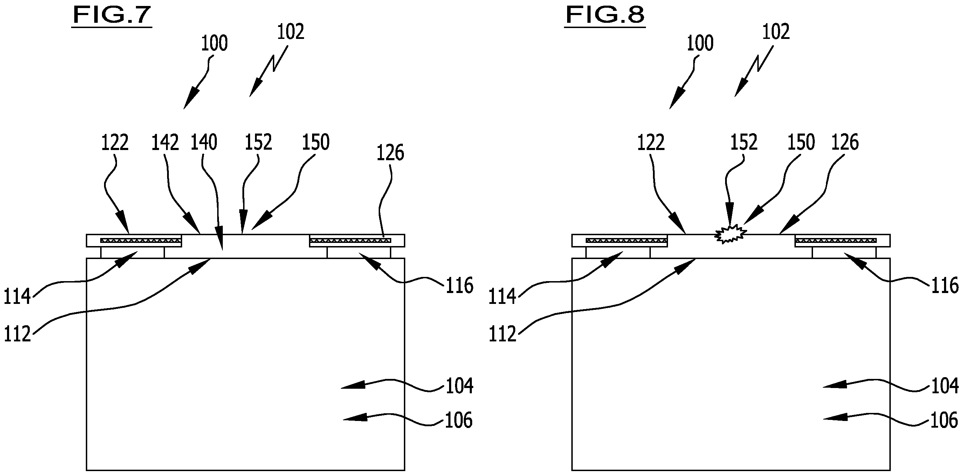

Eine in den Fig. 7 bis 12 dargestellte dritte Ausführungsform einer elektrochemischen Speichereinheit 100 unterscheidet sich hinsichtlich Aufbau und Funktion im Wesentlichen dadurch von der in den Fig. 1 bis 4 dargestellten ersten Ausführungsform, dass das Leiterplattenelement 126 mindestens eine Sollbruchstelle 150 aufweist, an welcher das Leiterplattenelement 126 bei einem Übersteigen einer kritischen Temperatur und/oder eines kritischen Drucks in dem Strömungskanal 140 bricht und/oder reißt.

Die mindestens eine Sollbruchstelle 150 ist vorzugsweise eine Materialschwachstelle 152.

Beispielsweise weist das Leiterplattenelement 126 im Bereich der mindestens einen Sollbruchstelle 150 eine um ca. 10 % oder mehr, insbesondere eine um ca. 20 % oder mehr, verringerte Dicke auf.

Die Dicke ist vorzugsweise senkrecht zu der Haupterstreckungsebene des Leiterplattenelements 126 definiert.

Die Dicke des Leiterplattenelements 126 variiert hier insbesondere längs dessen Haupterstreckungsebene.

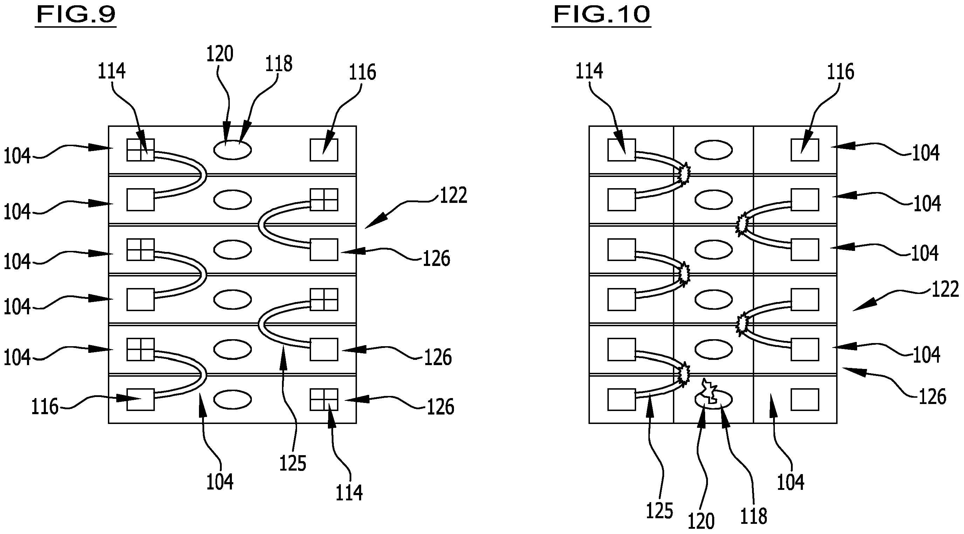

In Fig. 9 und 10 ist eine Variante der dritten Ausführungsform der elektrochemischen Einheit 100 gezeigt, in welcher mehrere, vorliegend sechs, elektrochemische Zellen 104 in einer Reihenschaltung miteinander verbunden sind und/oder in Reihe geschaltet sind.

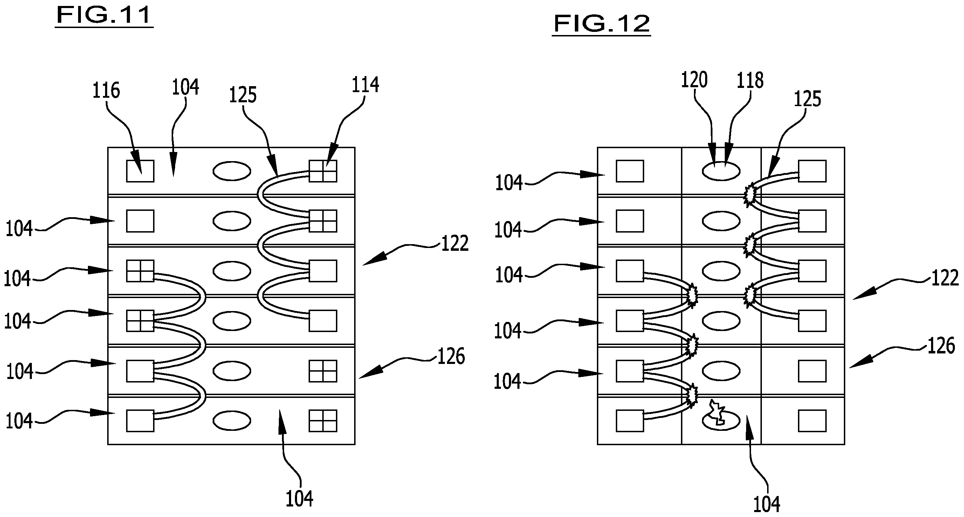

Die Fig. 11 und 12 zeigen eine Variante der dritten Ausführungsform der elektrochemischen Einheit 100, in welcher mehrere, vorliegend sechs, elektrochemische Zellen 104 in einer Parallelschaltung miteinander verbunden sind und/oder parallelgeschaltet sind.

In den Fig. 7, 9 und 11 ist das Leiterplattenelement 126 in einem Grundzustand dargestellt, während es in den Fig. 8, 10 und 12 in einem Zustand dargestellt ist, in welchem mindestens eine Sollbruchstelle 150 gebrochen und/oder gerissen ist.

In dem in den Fig. 8, 10 und 12 dargestellten Zustand ist mindestens eine elektrochemische Zelle 104 aufgrund des Brechens und/oder Reißens der mindestens einen Sollbruchstelle 150 elektrisch von den benachbarten elektrochemischen Zellen 104 getrennt.

Durch die elektrische Trennung werden vorzugsweise einzelne oder mehrere elektrochemische Zellen 104, insbesondere diejenigen elektrochemischen Zellen 104, bei denen es zu einem thermischen Event gekommen ist, elektrisch von den verbleibenden elektrochemischen Zellen 104 entkoppelt und/oder getrennt (vgl. Fig. 8, 10 und 12).

Vorzugsweise sind die ersten Anschlusselemente 114 und die zweiten Anschlusselemente 116 in das Leiterplattenelement 126 integriert. Beispielsweise bilden die ersten Anschlusselemente 114 und/oder die zweiten Anschlusselemente 116 eine Lage des Leiterplattenelements 126.

Im Übrigen stimmt die in den Fig. 7 bis 12 dargestellte dritte Ausführungsform einer elektrochemischen Speichereinheit 100 hinsichtlich Aufbau und Funktion im Wesentlichen mit der in den Fig. 1 bis 4 dargestellten ersten Ausführungsform überein, so dass auf deren Beschreibung insoweit Bezug genommen wird.

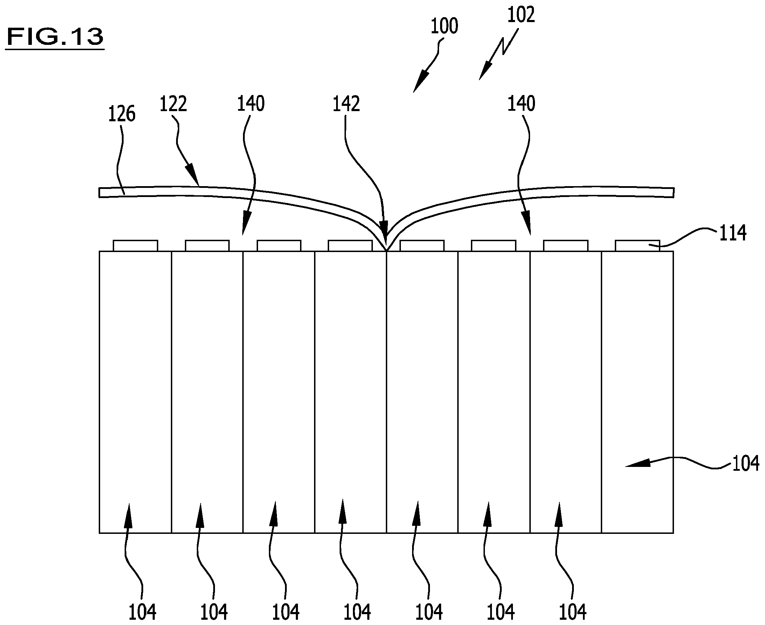

Eine in Fig. 13 dargestellte vierte Ausführungsform einer elektrochemischen Speichereinheit 100 unterscheidet sich hinsichtlich Aufbau und Funktion im Wesentlichen dadurch von der in den Fig. 1 bis 4 dargestellten ersten Ausführungsform, dass das Leiterplattenelement 126 sich in Richtung der Deckelelemente 112 der elektrochemischen Zellen 104 wölbt und/oder eine Krümmung in Richtung der Deckelelemente 112 der elektrochemischen Zellen 104 aufweist.

Die Wölbung und/oder die Krümmung bildet vorzugsweise ein Strömungsleitelement 142.

Alternativ können auch mehrere Wölbungen und/oder Krümmungen ausgebildet sein, welche mehrere Strömungsleitelemente 142 bilden (nicht gezeigt).

Beispielsweise weist das Leiterplattenelement 126 in einer senkrecht zu einer Haupterstreckungsebene einer Hauptseite einer elektrochemischen Zelle 104 genommenen Querschnitt zumindest näherungsweise eine V-Form auf.

Alternativ kann das Leiterplattenelement 126 einen zumindest näherungsweise W-förmigen Querschnitt aufweisen, so dass insbesondere mehr als zwei Strömungskanäle 140 gebildet sind.

Durch die V-Form oder eine W-Form sind die Wege zur Ableitung eines aus einer oder mehreren elektrochemischen Zellen 104 austretenden Fluids vorzugsweise verkürzt.

Vorteilhaft kann es sein, wenn das Strömungsleitelement 142 in direktem stofflichem Kontakt mit dem Deckelelement 112 einer oder mehrerer elektrochemischer Zellen 104 angeordnet ist und/oder kraftschlüssig und/oder stoffschlüssig und/oder formschlüssig damit verbunden ist.

Hierdurch sind insbesondere zwei Strömungskanäle 140 ausgebildet.

Ergänzend oder alternativ zu einer Wölbung und/oder Krümmung in Richtung der Deckelelemente 112 der elektrochemischen Zellen 104 kann vorgesehen sein, dass das Leiterplattenelement 126 in eine von den elektrochemischen Zellen 104 wegweisenden Richtung gewölbt und/oder gekrümmt ausgebildet ist (nicht gezeigt).

Es kann vorgesehen sein, dass ein oder mehrere Strömungsleitelemente 142 durch ein oder mehrere Erhebungen und/oder Vertiefungen in dem Leiterplattenelement 126 gebildet sind.

Beispielsweise wird das Leiterplattenelement 126 durch ein Umformverfahren, beispielsweise Heißformen, in eine nicht ebene und/oder nicht plane Form gebracht.

Im Übrigen stimmt die in Fig. 13 dargestellte vierte Ausführungsform einer elektrochemischen Speichereinheit 100 hinsichtlich Aufbau und Funktion im Wesentlichen mit der in den Fig. 1 bis 4 dargestellten ersten Ausführungsform überein, so dass auf deren Beschreibung insoweit Bezug genommen wird.

Mit der elektrochemischen Speichereinheit 100 kann die Gefahr einer Überhitzung und/oder eines Feuerschlags deutlich reduziert werden.

Es kann eine elektrische und/oder thermische und/oder mechanische Abschottung der elektrochemischen Zellen 104 mit einer Umgebung ausgebildet werden.

## Patentansprüche

1. Elektrochemische Speichereinheit (100), welche Folgendes umfasst:
- eine oder mehrere elektrochemische Zellen (104), wobei jede elektrochemische Zelle (104) ein erstes Anschlusselement (114) und/oder ein zweites Anschlusselement (116) umfasst, an denen eine elektrische Spannung abgreifbar ist; und
- ein Strömungsführungselement (122), welches mit zumindest einer der einen oder der mehreren elektrochemischen Zellen (104) verbunden ist,
wobei das Strömungsführungselement (122) ein Leiterplattenelement (126) umfasst oder daraus gebildet ist, wobei das Leiterplattenelement (126) insbesondere ein Polymermaterial umfasst, wobei auf einer der einen oder den mehreren elektrochemischen Zellen (104) zugewandten Seite des Leiterplattenelements (126) ein oder mehrere Strömungskanäle (140) und/oder ein oder mehrere Strömungsleitelemente (142) zur Führung eines aus zumindest einer der einen oder der mehreren elektrochemischen Zellen (104) austretenden Fluids ausgebildet und/oder angeordnet sind.

2. Elektrochemische Speichereinheit (100) nach Anspruch 1, **dadurch gekennzeichnet, dass** das Leiterplattenelement (126) nicht eben und/oder nicht plan ausgebildet ist, wobei insbesondere ein oder mehrere Strömungsleitelemente (142) durch eine oder mehrere Wölbungen des Leiterplattenelements (126) in Richtung der einen oder der mehreren elektrochemischen Zellen (104) oder durch eine oder mehrere Wölbungen des Leiterplattenelements (126) in einer von der einen oder den mehreren elektrochemischen Zellen (104) wegweisenden Richtung gebildet sind.

3. Elektrochemische Speichereinheit (100) nach Anspruch 1 oder 2,
**dadurch gekennzeichnet, dass** ein oder mehrere Strömungskanäle (140) der einen oder der mehreren Strömungskanäle (140) zwischen dem Leiterplattenelement (126) und einem oder mehreren von dem Leiterplattenelement (126) beabstandeten Deckelelementen (112) der einen oder der mehreren elektrochemischen Zellen (104) gebildet sind, wobei der eine oder die mehreren Strömungskanäle (140) insbesondere seitlich von
a) dem einen oder den mehreren ersten Anschlusselementen (114) der einen oder der mehreren elektrochemischen Zellen (104); und/oder
b) dem einen oder den mehreren zweiten Anschlusselementen (116)
der einen oder der mehreren elektrochemischen Zellen (104) begrenzt sind.

4. Elektrochemische Speichereinheit (100) nach einem der Ansprüche 1 bis 3, **dadurch gekennzeichnet, dass** ein oder mehrere Strömungskanäle (140) und/oder ein oder mehrere Strömungsleitelemente (142) durch Erhebungen und/oder Vertiefungen in dem Leiterplattenelement (126) auf einer der einen oder den mehreren elektrochemischen Zellen (104) zugewandten Seite des Leiterplattenelements (126) gebildet sind.

5. Elektrochemische Speichereinheit (100) nach einem der Ansprüche 1 bis 4, **dadurch gekennzeichnet, dass** die elektrochemische Speichereinheit (100) mehrere elektrochemische Zellen (104) umfasst und dass das Leiterplattenelement (126) mindestens eine Sollbruchstelle (150) aufweist, an welcher das Leiterplattenelement (126) bei einem Übersteigen einer kritischen Temperatur und/oder eines kritischen Drucks in einem oder mehreren zwischen dem Leiterplattenelement (126) und den mehreren elektrochemischen Zellen (104) gebildeten Strömungskanälen (140) bricht, wobei die mindestens eine Sollbruchstelle (150) insbesondere zwischen ersten Anschlusselementen (114) benachbarter elektrochemischer Zellen (104) und/oder zwischen zweiten Anschlusselementen (116) benachbarter elektrochemischer Zellen (104) angeordnet ist.

6. Elektrochemische Speichereinheit (100) nach einem der Ansprüche 1 bis 5, **dadurch gekennzeichnet, dass** das Leiterplattenelement (126) eine variierende Dicke entlang dessen Haupterstreckungsebene aufweist.

7. Elektrochemische Speichereinheit (100) nach einem der Ansprüche 1 bis 6, **dadurch gekennzeichnet, dass** auf einer der einen oder den mehreren elektrochemischen Zellen (104) abgewandten Seite des Leiterplattenelements (126) eine oder mehrere Leiterbahnen (125) angeordnet sind, mittels welcher das eine oder die mehreren ersten Anschlusselemente (114) und/oder das eine oder die mehreren zweiten Anschlusselemente (116) elektrisch kontaktierbar sind.

8. Elektrochemische Speichereinheit (100) nach einem der Ansprüche 1 bis 7, **dadurch gekennzeichnet, dass** das Leiterplattenelement (126) einen oder mehrere flexible Bereiche (146) aufweist oder vollständig flexibel ausgebildet ist.

9. Elektrochemische Speichereinheit (100) nach einem der Ansprüche 1 bis 8, **dadurch gekennzeichnet, dass** das Polymermaterial ein Polymermatrixmaterial ist, welches ein Fasermaterial umfasst, wobei insbesondere ein Anteil des Fasermaterials ca. 5 Gew.-% bis ca. 90 Gew.-%, insbesondere ca. 10 Gew.-% bis ca. 80 Gew.-%, beträgt, bezogen auf eine Gesamtmasse aus dem Polymermatrixmaterial und dem Fasermaterial.

10. Elektrochemische Speichereinheit (100) nach einem der Ansprüche 1 bis 9, **dadurch gekennzeichnet, dass** das Leiterplattenelement (126) aus einem vorimprägnierten Fasermaterial hergestellt ist, wobei das Fasermaterial insbesondere mit einem Harzmaterial und insbesondere einem Härter imprägniert ist.

11. Elektrochemische Speichereinheit (100) nach einem der Ansprüche 1 bis 10, **dadurch gekennzeichnet, dass** das Leiterplattenelement (126) mehrlagig ist und eine oder mehrere Lagen aus einem metallischen Material und eine oder mehrere Lagen aus dem Polymermaterial umfasst, wobei insbesondere eine Lage aus dem metallischen Material alternierend mit einer Lage aus dem Polymermaterial angeordnet ist, wobei das Polymermaterial insbesondere ein Polymermatrixmaterial ist und ein Fasermaterial umfasst.

12. Elektrochemische Speichereinheit (100) nach einem der Ansprüche 1 bis 11, **dadurch gekennzeichnet, dass** das Leiterplattenelement (126) ein oder mehrere Funktionselemente (128) aufweist, wobei das eine oder die mehreren Funktionselemente (128) insbesondere ausgewählt sind aus: einem Sensorelement (134), insbesondere einem Temperatursensor und/oder ein Drucksensor, einem Ausgleichsregelelement (136), einem Überwachungselement (132), einem Verbindungselement (130).

13. Elektrochemisches Speichersystem (102), umfassend eine oder mehrere elektrochemische Speichereinheiten (100) nach einem der Ansprüche 1 bis 12.

14. Verfahren zur Herstellung einer elektrochemischen Speichereinheit (100), insbesondere einer elektrochemischen Speichereinheit (100) nach einem der Ansprüche 1 bis 12, wobei das Verfahren Folgendes umfasst:
- Verbinden eines Strömungsführungselements (122) mit einer oder mehreren elektrochemischen Zellen (104), wobei jede elektrochemische Zelle (104) ein erstes Anschlusselement (114) und/oder ein zweites Anschlusselement (116) umfasst, an denen eine elektrische Spannung abgreifbar ist;
wobei das Strömungsführungselement (122) ein Leiterplattenelement (126) umfasst oder daraus gebildet ist und/oder wird, wobei das Leiterplattenelement (126) insbesondere ein Polymermaterial umfasst, wobei durch das Verbinden auf einer der einen oder den mehreren elektrochemischen Zellen (104) zugewandten Seite des Leiterplattenelements (126) ein oder mehrere Strömungskanäle (140) und/oder ein oder mehrere Strömungsleitelemente (142) zur Führung eines aus zumindest einer der einen oder der mehreren elektrochemischen Zellen (104) austretenden Fluids ausgebildet werden.

15. Verfahren nach Anspruch 14, **dadurch gekennzeichnet, dass** jeweils eine Durchkontaktierung einer der einen oder den mehreren elektrochemischen Zellen (104) abgewandten Seite des Leiterplattenelements (126) und einer der einen oder den mehreren elektrochemischen Zellen (104) zugewandten Seite des Leiterplattenelements (126) ausgebildet ist und/oder wird, wobei mittels der einen oder der mehreren Durchkontaktierung ein elektrischer Kontakt zwischen
a) einem oder mehreren ersten Anschlusselementen (114) und einer der einen oder den mehreren elektrochemischen Zellen (104) abgewandten Seite des Leiterplattenelements (126); und/oder
b) einem oder mehreren zweiten Anschlusselementen (116) und einer der einen oder den mehreren elektrochemischen Zellen (104) abgewandten Seite des Leiterplattenelements (126) ausgebildet wird.

## Claims

1. Electrochemical storage unit (100) which comprises the following:
- one or more electrochemical cells (104), wherein each electrochemical cell (104) comprises a first connection element (114) and/or a second connection element (116) at which an electrical voltage can be tapped; and
- a flow guide element (122) which is connected to at least one of the one or more electrochemical cells (104),
wherein the flow guide element (122) comprises or is formed from a printed circuit board element (126), wherein the printed circuit board element (126) comprises in particular a polymer material, wherein one or more flow channels (140) and/or one or more flow conveying elements (142) for guiding a fluid emerging from at least one of the one or more electrochemical cells (104) are formed and/or arranged on a side of the printed circuit board element (126) facing the one or more electrochemical cells (104).

2. Electrochemical storage unit (100) according to claim 1, **characterized in that** the printed circuit board element (126) is not flat and/or not planar, in particular one or more flow conveying elements (142) being formed by one or more curvatures of the printed circuit board element (126) in the direction of the one or more electrochemical cells (104) or by one or more curvatures of the printed circuit board element (126) in a direction facing away from the one or more electrochemical cells (104).

3. Electrochemical storage unit (100) according to claim 1 or 2,
**characterized in that** one or more flow channels (140) of the one or more flow channels (140) are formed between the printed circuit board element (126) and one or more cover elements (112) of the one or more electrochemical cells (104) spaced apart from the printed circuit board element (126), the one or more flow channels (140) being delimited in particular laterally by
a) the one or more first connection elements (114) of the one or more electrochemical cells (104); and/or
b) the one or more second connection elements (116) of the one or more electrochemical cells (104).

4. Electrochemical storage unit (100) according to any of claims 1 to 3,
**characterized in that** one or more flow channels (140) and/or one or more flow conveying elements (142) are formed by elevations and/or depressions in the printed circuit board element (126) on a side of the printed circuit board element (126) facing the one or more electrochemical cells (104).

5. Electrochemical storage unit (100) according to any of claims 1 to 4,
**characterized in that** the electrochemical storage unit (100) comprises a plurality of electrochemical cells (104) and **in that** the printed circuit board element (126) has at least one predetermined breaking point (150), at which the printed circuit board element (126) breaks when a critical temperature and/or a critical pressure is exceeded in one or more flow channels (140) formed between the printed circuit board element (126) and the plurality of electrochemical cells (104), the at least one predetermined breaking point (150) being arranged in particular between first connection elements (114) of adjacent electrochemical cells (104) and/or between second connection elements (116) of adjacent electrochemical cells (104).

6. Electrochemical storage unit (100) according to any of claims 1 to 5,
**characterized in that** the printed circuit board element (126) has a varying thickness along its main extension plane.

7. Electrochemical storage unit (100) according to any of claims 1 to 6,
**characterized in that** one or more conductor tracks (125) are arranged on a side of the printed circuit board element (126) facing away from the one or more electrochemical cells (104), by means of which tracks the one or more first connection elements (114) and/or the one or more second connection elements (116) can be electrically contacted.

8. Electrochemical storage unit (100) according to any of claims 1 to 7,
**characterized in that** the printed circuit board element (126) comprises one or more flexible regions (146) or is completely flexible.

9. Electrochemical storage unit (100) according to any of claims 1 to 8,
**characterized in that** the polymer material is a polymer matrix material which comprises a fiber material, in particular a proportion of the fiber material being approximately 5 wt.% to approximately 90 wt.%, in particular approximately 10 wt.% to approximately 80 wt.%, based on a total mass of the polymer matrix material and the fiber material.

10. Electrochemical storage unit (100) according to any of claims 1 to 9,
**characterized in that** the printed circuit board element (126) is made of a preimpregnated fiber material, the fiber material being impregnated in particular with a resin material and in particular a hardener.

11. Electrochemical storage unit (100) according to any of claims 1 to 10,
**characterized in that** the printed circuit board element (126) is multilayered and comprises one or more layers made of a metal material and one or more layers made of the polymer material, in particular a layer of the metal material being arranged alternately with a layer of the polymer material, the polymer material in particular being a polymer matrix material and comprising a fiber material.

12. Electrochemical storage unit (100) according to any of claims 1 to 11,
**characterized in that** the printed circuit board element (126) comprises one or more functional elements (128), the one or more functional elements (128) in particular being selected from: a sensor element (134), in particular a temperature sensor and/or a pressure sensor, a compensation control element (136), a monitoring element (132) or a connecting element (130).

13. Electrochemical storage system (102) comprising one or more electrochemical storage units (100) according to any of claims 1 to 12.

14. Method for producing an electrochemical storage unit (100), in particular an electrochemical storage unit (100) according to any of claims 1 to 12, wherein the method comprises the following:
- connecting a flow guide element (122) to one or more electrochemical cells (104), wherein each electrochemical cell (104) comprises a first connection element (114) and/or a second connection element (116) at which an electrical voltage can be tapped;
wherein the flow guide element (122) comprises or is and/or is formed from a printed circuit board element (126), wherein the printed circuit board element (126) comprises in particular a polymer material, wherein one or more flow channels (140) and/or one or more flow conveying elements (142) for guiding a fluid emerging from at least one of the one or more electrochemical cells (104) are formed by being connected on a side of the printed circuit board element (126) facing the one or more electrochemical cells (104).

15. Method according to claim 14, **characterized in that** a through-contact is formed in each case on a side of the printed circuit board element (126) facing away from the one or more electrochemical cells (104) and on a side of the printed circuit board element (126) facing the one or more electrochemical cells (104), an electrical contact being formed by means of the one or more through-contacts between
a) one or more first connection elements (114) and a side of the printed circuit board element (126) facing away from the one or more electrochemical cells (104); and/or
b) one or more second connection elements (116) and a side of the printed circuit board element (126) facing away from the one or more electrochemical cells (104).

## Revendications

1. Unité de stockage électrochimique (100) comprenant les éléments suivants :
- une ou plusieurs cellules électrochimiques (104), dans laquelle chaque cellule électrochimique (104) comprend un premier élément formant borne (114) et/ou un second élément formant borne (116) sur lesquels une tension électrique peut être prélevée ; et
- un élément de guidage d'écoulement (122) relié à au moins l'une de la ou des cellules électrochimiques (104),
dans laquelle l'élément de guidage d'écoulement (122) comprend un élément formant carte de circuit imprimé (126) ou est formé à partir de celui-ci, dans laquelle l'élément formant carte de circuit imprimé (126) comprend en particulier un matériau polymère, dans laquelle un ou plusieurs canaux d'écoulement (140) et/ou un ou plusieurs éléments de guidage d'écoulement (142) sont réalisés et/ou disposés sur un côté de l'élément formant carte de circuit imprimé (126) orienté vers la ou les cellules électrochimiques (104), pour guider un fluide sortant d'au moins l'une de la ou des cellules électrochimiques (104).

2. Unité de stockage électrochimique (100) selon la revendication 1, **caractérisée en ce que** l'élément formant carte de circuit imprimé (126) n'est pas réalisé de manière à être plat et/ou plan, dans laquelle en particulier un ou plusieurs éléments de guidage d'écoulement (142) sont formés par une ou plusieurs courbures de l'élément formant carte de circuit imprimé (126) en direction de la ou des cellules électrochimiques (104) ou par une ou plusieurs courbures de l'élément formant carte de circuit imprimé (126) dans une direction s'éloignant de la ou des cellules électrochimiques (104).

3. Unité de stockage électrochimique (100) selon la revendication 1 ou 2,
**caractérisée en ce qu'**un ou plusieurs canaux d'écoulement (140) du ou des canaux d'écoulement (140) sont formés entre l'élément formant carte de circuit imprimé (126) et un ou plusieurs éléments formant couvercles (112) de la ou des cellules électrochimiques (104), lesquels éléments formant couvercles sont espacés de l'élément formant carte de circuit imprimé (126), dans laquelle le ou les canaux d'écoulement (140) sont en particulier délimités latéralement par
a) le ou les premiers éléments formant bornes (114) de la ou des cellules électrochimiques (104) ; et/ou
b) le ou les seconds éléments formant bornes (116) de la ou des cellules électrochimiques (104).

4. Unité de stockage électrochimique (100) selon l'une des revendications 1 à 3,
**caractérisée en ce qu'**un ou plusieurs canaux d'écoulement (140) et/ou un ou plusieurs éléments de guidage d'écoulement (142) sont formés par des bosses et/ou des creux dans l'élément formant carte de circuit imprimé (126) sur un côté de l'élément formant carte de circuit imprimé (126) orienté vers la ou les cellules électrochimiques (104).

5. Unité de stockage électrochimique (100) selon l'une des revendications 1 à 4,
**caractérisée en ce que** l'unité de stockage électrochimique (100) comprend plusieurs cellules électrochimiques (104) et **en ce que** l'élément formant carte de circuit imprimé (126) présente au moins un point de rupture (150) au niveau duquel l'élément formant carte de circuit imprimé (126) se rompt en cas de dépassement d'une température critique et/ou d'une pression critique dans un ou plusieurs canaux d'écoulement (140) formés entre l'élément formant carte de circuit imprimé (126) et les cellules électrochimiques (104), dans laquelle l'au moins un point de rupture (150) est en particulier disposé entre des premiers éléments formant bornes (114) de cellules électrochimiques (104) adjacentes et/ou entre des seconds éléments formant bornes (116) de cellules électrochimiques (104) adjacentes.

6. Unité de stockage électrochimique (100) selon l'une des revendications 1 à 5,
**caractérisée en ce que** l'élément formant carte de circuit imprimé (126) présente une épaisseur variable le long de son plan d'extension principal.

7. Unité de stockage électrochimique (100) selon l'une des revendications 1 à 6,
**caractérisée en ce que**, sur un côté de l'élément formant carte de circuit imprimé (126) opposé à la ou aux cellules électrochimiques (104), sont disposées une ou plusieurs pistes conductrices (125) au moyen desquelles le ou les premiers éléments formant bornes (114) et/ou le ou les seconds éléments formant bornes (116) peuvent être mis en contact électriquement.

8. Unité de stockage électrochimique (100) selon l'une des revendications 1 à 7,
**caractérisée en ce que** l'élément formant carte de circuit imprimé (126) présente une ou plusieurs zones flexibles (146) ou est réalisé de manière à être entièrement flexible.

9. Unité de stockage électrochimique (100) selon l'une des revendications 1 à 8,
**caractérisée en ce que** le matériau polymère est un matériau à matrice polymère comprenant un matériau fibreux, dans laquelle en particulier une proportion du matériau fibreux est d'environ 5 % en poids à environ 90 % en poids, en particulier d'environ 10 % en poids à environ 80 % en poids, par rapport à une masse totale constituée du matériau à matrice polymère et du matériau fibreux.

10. Unité de stockage électrochimique (100) selon l'une des revendications 1 à 9,
**caractérisée en ce que** l'élément formant carte de circuit imprimé (126) est fabriqué à partir d'un matériau fibreux préimprégné, dans laquelle le matériau fibreux est en particulier imprégné d'un matériau résineux et en particulier d'un durcisseur.

11. Unité de stockage électrochimique (100) selon l'une des revendications 1 à 10,
**caractérisée en ce que** l'élément formant carte de circuit imprimé (126) est multicouche et comprend une ou plusieurs couches d'un matériau métallique et une ou plusieurs couches du matériau polymère, dans laquelle en particulier une couche du matériau métallique est disposée en alternance avec une couche du matériau polymère, dans laquelle le matériau polymère est en particulier un matériau à matrice polymère et comprend un matériau fibreux.

12. Unité de stockage électrochimique (100) selon l'une des revendications 1 à 11,
**caractérisée en ce que** l'élément formant carte de circuit imprimé (126) présente un ou plusieurs éléments fonctionnels (128), dans laquelle le ou les éléments fonctionnels (128) sont en particulier choisis parmi : un élément formant capteur (134), en particulier un capteur de température et/ou un capteur de pression, un élément de régulation d'équilibrage (136), un élément de surveillance (132), un élément de liaison (130).

13. Système de stockage électrochimique (102), comprenant une ou plusieurs unités de stockage électrochimiques (100) selon l'une des revendications 1 à 12.

14. Procédé de fabrication d'une unité de stockage électrochimique (100), en particulier d'une unité de stockage électrochimique (100) selon l'une des revendications 1 à 12, dans lequel le procédé comprend l'étape suivante :
- liaison d'un élément de guidage d'écoulement (122) à une ou plusieurs cellules électrochimiques (104), dans lequel chaque cellule électrochimique (104) comprend un premier élément formant borne (114) et/ou un second élément formant borne (116) sur lesquels une tension électrique peut être prélevée ;
dans lequel l'élément de guidage d'écoulement (122) comprend un élément formant carte de circuit imprimé (126) ou est formé à partir de celui-ci, dans lequel l'élément formant carte de circuit imprimé (126) comprend en particulier un matériau polymère, dans lequel un ou plusieurs canaux d'écoulement (140) et/ou un ou plusieurs éléments de guidage d'écoulement (142) sont réalisés, grâce à la liaison, sur un côté de l'élément formant carte de circuit imprimé (126) orienté vers la ou les cellules électrochimiques (104) pour guider un fluide sortant d'au moins l'une de la ou des cellules électrochimiques (104).

15. Procédé selon la revendication 14, **caractérisé en ce que** respectivement une connexion transversale d'un côté de l'élément formant carte de circuit imprimé (126) opposé à la ou aux cellules électrochimiques (104) et d'un côté de l'élément formant carte de circuit imprimé (126) orienté vers la ou les cellules électrochimiques (104) sont réalisées, dans lequel, à l'aide de la ou des connexions transversales, un contact électrique est réalisé entre
a) un ou plusieurs premiers éléments formant bornes (114) et un côté de l'élément formant carte de circuit imprimé (126) opposé à la ou aux cellules électrochimiques (104) ; et/ou
b) un ou plusieurs seconds éléments formant bornes (116) et un côté de l'élément formant carte de circuit imprimé (126) opposé à la ou aux cellules électrochimiques (104).
